# EUROPÄISCHE PATENTSCHRIFT

(11) **EP 0 615 831 B1**
(45) Veröffentlichungstag und Bekanntmachung des Hinweises auf die Patenterteilung: **19.08.1998**
(21) Anmeldenummer: 94103425.8
(22) Anmeldetag: 07.03.1994
(51) Int. Cl.: B29C 53/04, B29C 53/40, B29C 51/00

(54) **Verfahren und Vorrichtung zur Herstellung von Gehäusen oder dergleichen sowie derartige Gehäuse oder dergleichen**
Method and apparatus for making housings or the like, and housings thereby obtained
Procédé et dispositif pour la fabrication de boîtiers ou d'objets similaires et boîtiers ainsi obtenus

(30) Priorität: 16.03.1993 DE 4308391
(43) Veröffentlichungstag der Anmeldung: 21.09.1994
(73) Patentinhaber: T.T.K. KUNSTSTOFF-TECHNOLOGIE GmbH, D-81829 München (DE)
(72) Erfinder: Karls, Georg, D-81825 München (DE)
(74) Vertreter: Grape, Knut, Dipl.-Ing.

(56) Entgegenhaltungen:
- EP-A- 0 204 890
- EP-A- 0 531 261
- DE-B- 1 031 505
- DE-U- 8 611 965
- FR-A- 1 515 725
- GB-A- 1 362 242

## Beschreibung

Die Erfindung betrifft ein Verfahren und eine Vorrichtung zur Herstellung von Gehäusen oder dergleichen aus im wesentlichen flächigen Gegenständen aus Kunststoff oder dergleichen, insbesondere thermisch erweich- bzw. schmelzbarem, Material sowie derartige Gehäuse oder dergleichen.

Verfahren und Vorrichtungen zur Herstellung von Gehäusen, kubischen Körpern, Rohren oder dergleichen aus insbesondere thermisch erweich- bzw. schmelzbarem Material, beispielsweise aus Kunststoffen, sowie derartige Gehäuse, kubische Körper, Rohre oder dergleichen sind allgemein bekannt. Allerdings sind diese Verfahren, wie zum Beispiel das Spritzgießen, aufgrund hoher Werkzeugkosten erst bei großen Stückzahlen wirtschaftlich. Vorserien und kleine Stückzahlen von Gehäusen, kubischen Körpern, Rohren oder dergleichen sind insofern aus wirtschaftlichen Gründen nicht oder nur kaum realisierbar. Hinzu kommen lange Fertigungszeiten zwischen etwa 6 bis 12 Monaten vom Beginn bis zur Serienlieferung. Um einzelne solcher Gehäuse, kubischer Körper, Rohre oder dergleichen herstellen zu lassen, muß daher auf den sogenannten Design- oder Modellbau zurückgegriffen werden, wobei jedoch in aller Regel keine reproduzierbaren, fertigungsrelevanten technischen Bauteile geschaffen werden, die auch gleich in Serie gehen können. Des weiteren ist bei diesen Verfahren, wie zum Beispiel beim Tiefziehen, von Nachteil, daß die Bauteile oftmals zum einen außerhalb der vorgegebenen Toleranzen liegen und zum anderen in Biegungsbereichen Materialverzug, Materialausdünnungen, Einfallstellen und Glanzstellen aufweisen. Schließlich ist bei diesen Verfahren, wie zum Beispiel beim Schäumen, nachteilig, daß sich einerseits dünne Wandstärken fertigungstechnisch nicht, zumindest zur sehr schwer handhaben lassen, und daß die erhaltenen Rohlinge andererseits in jedem Fall einer mechanischen Nacharbeit, wie Füllen, Schleifen oder Fräsen, bedürfen, um die vorgegebenen Toleranzen zu erreichen. Sämtliche dieser vorgenannten Verfahren besitzen zudem den Nachteil eines ausgesprochen hohen konstruktiven und fertigungstechnischen Aufwandes, sofern die Gehäuse und kubischen Körper oder dergleichen mit wenigstens einer Gehäusefläche versehen sind, die einen konkav und/oder konvex geformten Bereich aufweist. Letztendlich sind sämtlichen dieser Verfahren auch Grenzen bei der Herstellung von Rohren größerer Länge gesetzt.

Darüber hinaus beschreibt die EP-A 0 204 890 ein Verfahren zur Herstellung eines geformten Bauelements aus Schichtpreßstoffen, bei welchem innen- bzw. außenliegende Aussparungen vorgesehen sind, so daß die Materialdicke des Bauelements in diesen Bereichen vermindert ist.

Die EP-A 0 531 261 offenbart einen im wesentlichen flächigen Gegenstand aus Kunststoff, der als Überzug für einen selbsttragenden Gegenstand vorgesehen ist und in seinem Kantenbereich eine verminderte Materialdicke aufweist.

Weiterhin ist in der FR-A 1.515.725 eine Vorrichtung zur kontinuierlichen Herstellung von Spiralfedern aus Papierrollen oder ähnlichen dünnen und flexiblen Materialien, wie zum Beispiel Kunststoff, beschrieben. Diese Vorrichtung sieht dabei eine Schablone mit einem konkav geformten Bereich vor, die auf der ebenflächigen Auflage zur Verformung des flächigen Gegenstands angeordnet ist.

Des weiteren geht aus der GB-PS 1 362 242 ein Kunststoffgelenk an einem im wesentlichen flächigen Gegenstand hervor, das durch eine Nut mit einer Vielzahl von Ausnehmungen, die etwa parallel zueinander und etwa senkrecht zur Nut verlaufen, gebildet ist.

Weiterhin ist in der DE-AS 1 031 505 ein Verfahren zur Biegeverformung von im wesentlichen flächigen Gegenständen aus thermoplastischen Schaumstoffen offenbart, bei welchem die Gegenstände zunächst rechtwinklig abgebogen werden. Anschließend werden die Gegenstände im Kehlbereich kurzfristig und nur sehr oberflächlich erhitzt, um die äußeren Kräfte im Bereich der gestauchten Fasern des Schaumstoffes zu stabilisieren. Die Erhitzung bzw. Erwärmung findet somit unmittelbar nach der eigentlichen Biegung statt.

Schließlich ist in dem DE-GM 86 11 965.6 ein Gehäuse beschrieben, das aus zwei Gehäuseschalen und einer darin eingesetzten Front- sowie Rückplatte gebildet ist. Die beiden Gehäuseschalen sind jeweils aus einer Platte aus Kunststoff hergestellt, die im Bereich von eingefrästen Rillen oder Nuten erwärmt und anschließend rechtwinklig abgebogen bzw. abgekantet wird, so daß sich als Gehäuseschale jeweils eine Bodenwand mit zwei senkrechten Seitenwänden ergibt. Dieses Gehäuse besitzt allerdings keine Gehäusefläche, die einen konkav und/oder konvex geformten Bereich aufweist.

Ausgehend vom Stand der Technik liegt der Erfindung die Aufgabe zugrunde, ein Verfahren und ein Vorrichtung zur Herstellung von Gehäusen oder dergleichen aus im wesentlichen flächigen Gegenständen aus Kunststoff oder dergleichen, insbesondere thermisch erweich- bzw. schmelzbarem, Material bereitzustellen, mit dem bzw. der sich die obigen Nachteile verhindern und insbesondere auch kleinere oder kleine Stückzahlen von Gehäusen, die wenigstens eine Gehäusefläche mit einem konkav und/oder konvex geformten Bereich aufweisen, mit einer hohen Maßgenauigkeit ausgesprochen wirtschaftlich herstellen lassen. Darüber hinaus liegt der Erfindung die Aufgabe zugrunde, Gehäuse, welche wenigstens eine Gehäusefläche mit einem konkav und/oder konvex geformten Bereich aufweisen, zur Verfügung zu stellen, die in kleineren oder kleinen Stückzahlen mit einer hohen Maßgenauigkeit ausgesprochen wirtschaftlich herstellbar sind.

Diese Aufgabe wird in verfahrenstechnischer Hinsicht durch die kennzeichnenden Merkmale des Anspruchs 1 gelöst.

Demnach wird wenigstens einer der flächigen Gegenstände zur Bildung einer Gehäusefläche mit einem konkav und/oder konvex geformten Bereich durch Verminderung der Materialdicke im wesentlichen im konkav und/oder konvex zu formenden Bereich verformbar gemacht und anschließend in die für die Gehäusefläche vorbestimmte Form formstabil verbracht. Das erfindungsgemäße Verfahren zeichnet sich somit durch eine ausgesprochen hohe Wirtschaftlichkeit selbst bei kleinsten Stückzahlen von Gehäusen mit wenigstens einer Gehäusefläche aus, die einen konkav und/oder konvex geformten Bereich bzw. eine oder mehrere nach innen und/oder außen verlaufende Rundungen, Wölbungen etc. besitzt. Des weiteren sind mit dem erfindungsgemäßen Verfahren sehr kurze Fertigungslaufzeiten sowie eine hohe Fertigungsgenauigkeit bei den hergestellten Gehäusen sichergestellt. Insoweit eignet sich das erfindungsgemäße Verfahren ebensogut für die Einzelfertigung wie auch die serielle Fertigung von Gehäusen mit wenigstens einer Gehäusefläche, die einen konkav und/oder konvex geformten Bereich bzw. eine oder mehrere nach innen und/oder nach außen verlaufende Rundungen, Wölbungen etc. aufweist. Das erfindungsgemäße Verfahren hat schließlich den großen Vorteil eines nur geringen Energieaufwandes.

Vorteilhafte verfahrenstechnische Maßnahmen sind in den Ansprüchen 2 bis 8 beschrieben.

Vorzugsweise wird die Materialdicke des flächigen Gegenstands von der wenigstens einen Gehäusefläche im konkav und/oder konvex zu formenden Bereich auf etwa zwischen 10% bis 40%, insbesondere auf circa 25%, der Materialdicke des flächigen Gegenstands im übrigen Bereich vermindert. Durch eine solche Wahl der Materialdicke erhält der an sich starr ausgebildete Gegenstand im konkav und/oder konvex zu formenden Bereich eine gewisse Flexibilität, die ohne weiteres eine Rundbiegung des flächigen Gegenstands in diesem Bereich zuläßt, und zwar auch selbst durch sogenannte Kaltverformung. Gleichzeitig aber wird durch eine solche Wahl der Materialdicke sichergestellt, daß der Übergang zwischen konkav und/oder konvex zu formendem Bereich und übrigem Bereich des flächigen Gegenstands keine Sollbruchstelle entsteht.

Die Materialdicke des flächigen Gegenstands von der wenigstens einen Gehäusefläche wird dabei im wesentlichen im konkav und/oder konvex zu formenden Bereich auf besonders vorteilhafte Weise mittels Fräsung vermindert.

Durch die Vorsehung von Nuten oder dergleichen Ausnehmungen gemäß Anspruch 2 im konkav und/oder konvex zu formenden Bereich des flächigen Gegenstands ist eine besonders hohe Maßgenauigkeit und Gleichförmigkeit der jeweiligen Rundung, Wölbung etc. sichergestellt, da ein über den gesamten Bereich gleicher Winkel ohne Gefahr eines sogenannten "Verlaufens" in diesem Bereich erreichbar ist.

Von ganz besonderem Vorteil für das erfindungsgemäße Verfahren sind in diesem Zusammenhang die Merkmale des Anspruchs 3, wodurch sich neben einer hohen Flexibilität gleichzeitig eine große Formstabilität des flächigen Gegenstands in dem konkav und/oder konvex zu formenden bzw. später konkav und/oder konvex geformten Bereich erhalten läßt. Dies wiederum ermöglicht selbst die Herstellung von Gehäusen mit wenigstens einer Gehäusefläche, die ausgesprochen große nach innen bzw. nach außen verlaufende Rundungen aufweist. Durch die mittels derartig ausgebildeter Nuten zu erzielende Formstabilität des konkav und/oder konvex zu formenden Bereichs des flächigen Gegenstands bleibt die Oberflächenstruktur der Gehäusefläche nach der Verformung erhalten. Ein Verzug, Spannungsrisse etc. an der Oberfläche der mit einer Rundung, Wölbung oder dergleichen zu versehenden Gehäusefläche werden daher sicher vermieden. Infolgedessen ist es ebenso möglich, die Oberfläche der jeweiligen Gehäusefläche vorab zu bedrucken, ohne dann Gefahr zu laufen, daß die bedruckte Oberfläche oder der Druck selbst durch das erfindungsgemäße Verfahren beschädigt werden.

Insbesondere liegt es im Rahmen der Erfindung, die Nuten oder dergleichen Ausnehmungen im wesentlichen durchgehend oder alternativ unterbrochen auszubilden. Hierdurch sind vielfältige, zudem variationsreiche Ausbildungs- und Anordnungsmöglichkeiten für die Nuten entsprechend der jeweiligen Größe wie auch Form des konkav und/oder konvex zu formenden Bereichs bzw. der nach innen und/oder nach außen verlaufenden Rundung, Wölbung etc. sowie entsprechend der Eigenschaften und Besonderheiten des Materials von dem flächigen Gegenstand an die Hand gegeben.

Vorteilhafterweise wird wenigstens ein Teil der Nuten oder dergleichen Ausnehmungen als Kombination der zuvor erwähnten Nuten von etwa in Richtung der Erzeugenden des konkav und/oder konvex zu formenden Bereichs verlaufenden Stegen oder dergleichen unterbrochen.

Des weiteren liegt es im Rahmen der Erfindung, die Nuten oder dergleichen Ausnehmungen an derjenigen Seite des wenigstens einen flächigen Gegenstands im konkav und/oder konvex zu formenden Bereich vorzusehen, welche der Innenseite der Gehäusefläche entspricht.

Von weiterem Vorteil von dem erfindungsgemäßen Verfahren werden die Nuten oder dergleichen Ausnehmungen mit einer Tiefe von etwa 0,05 mm bis circa 0,5 mm, insbesondere von etwa 0,3 mm, versehen.

Zur einfachen und schnellen, damit besonders kostengünstigen, sowie gleichermaßen genauen Herstellung der Nuten oder dergleichen Ausnehmungen werden die Nuten oder dergleichen Ausnehmungen mittels Fräsung des flächigen Gegenstands im wesentlichen im konkav und/oder konvex zu formenden Bereich der wenigstens einen Gehäusefläche eingearbeitet.

Von ganz besonderem Vorteil für das erfindungsgemäße Verfahren sind in diesem Zusammenhang die Merkmale des Anspruchs 4. Aufgrund einer solchen unterschiedlichen Vorschubgeschwindigkeit des Fräsers in jeweils entgegengesetzter Richtung nämlich lassen sich Nuten mit unterschiedlicher Tiefe erhalten, ohne daß eine Höhenverstellung des Fräsers bei der jeweiligen Richtungsumkehr notwendig wird. So wird durch die unterschiedliche Vorschubgeschwindigkeit des Fräsers ein unterschiedlicher Materialabtrag an dem flächigen Gegenstand, gegebenenfalls nach vorhergehender Reduzierung der Materialdicke im konkav und/oder konvex zu formenden Bereich, d.h. bei geringerer Vorschubgeschwindigkeit ein größerer Materialabtrag und umgekehrt, erhalten.

In weiterer Ausgestaltung des erfindungsgemäßen Verfahrens ist es von Vorteil, daß die Nuten oder dergleichen Ausnehmungen mit einem Schaftfräser, Scheibenfräser oder dergleichen gebildet werden.

Nach einem weiteren Merkmal des erfindungsgemäßen Verfahrens werden die Nuten oder dergleichen Ausnehmungen endseitig etwa in Richtung der Erzeugenden des konkav und/oder konvex zu formenden Bereichs verlaufend begradigt. Auf diese Weise wird einerseits die Kerbwirkung im Übergang zwischen dem konkav und/oder konvex zu formenden Bereich und dem übrigen Bereich des flächigen Gegenstands vermindert. Andererseits werden durch eine solche Begradigung zusätzliche Anschlag- und gegebenenfalls Fixiermöglichkeiten für in dem jeweiligen späteren Gehäuse unterzubringende Platinen etc., welche an der Innenseite der Gehäusefläche anzubringen sind, erhalten.

Zweckmäßigerweise wird der wenigstens eine flächige Gegenstand vorzugsweise vor und/oder nach der Verminderung der Materialdicke und/oder nach der Einarbeitung der Nuten oder dergleichen Ausnehmungen im wesentlichen im konkav und/oder konvex zu formenden Bereich und/oder im übrigen Bereich mechanisch bearbeitet wird. Auf diese Weise kann der flächige Gegenstand variabel auf das gewünschte Maß gebracht und mit Bohrungen, zusätzlichen Nuten und anderem versehen werden.

Entsprechend den Maßnahmen nach Anspruch 5 wird der wenigstens eine flächige Gegenstand in eine Schablone mit einem konkav oder dergleichen geformten Bereich zur Erzeugung des konkav und/oder konvex zu formenden, biegsamen Bereichs der Gehäusefläche eingebracht und in der Schablone in ihrer vorbestimmten Form gehalten.

Von großer Bedeutung für das erfindungsgemäße Verfahren sind weiterhin die Merkmale des Anspruchs 6. Durch eine solche insbesondere flächige Erwärmung erhält der flächige Gegenstand zur Ausbildung des konkav und/oder konvex zu formenden Bereichs, d.h. der nach innen bzw. nach außen verlaufenden Rundung, Wölbung etc., eine zusätzliche Flexibilität und Biegsamkeit in diesem Bereich. Zugleich aber läßt sich anschließend die Formstabilität des vormals flächigen und nunmehr eine Gehäusefläche bildenden Gegenstands im konkav und/oder konvex geformten Bereich wesentlich erhöhen. Zur schnellen und gezielten Wärmezufuhr wird der wenigstens eine flächige Gegenstand dabei vorzugsweise durch Heißluft erwärmt.

Von außerordentlicher Bedeutung für das erfindungsgemäße Verfahren ist weiterhin die Tatsache, daß der wenigstens eine flächige Gegenstand, der im konkav und/oder konvex zu formenden Bereich vorab erwärmt wurde, in eine Schablone mit einem konkav und/oder konvex geformten Bereich zur Erzeugung des konkav und/oder konvex zu formenden Bereichs der Gehäusefläche eingebracht und in der Schablone abgekühlt. Die Formgebung des konkav und/oder konvex zu formenden Bereichs bzw. die nach innen und/oder nach außen verlaufende Rundung, Wölbung etc. der Gehäusefläche gestaltet sich somit ausgesprochen einfach und zugleich äußerst maßgenau. Durch die gleichzeitige Abkühlung des zuvor erwärmten Bereichs des in die Schablone eingebrachten Gegenstands erhält der vormals flächige Gegenstand und nunmehr konkav und/oder konvex geformte Bereich der Gehäusefläche eine hohe Formstabilität.

Nach Anspruch 7 wird der konkav und/oder konvex zu formende Bereich des flächigen Gegenstands in der Schablone um einen abkühlbedingten Rückfederungswinkel α_{F}, insbesondere von etwa 3°, überbogen, und zwar unabhängig von dem jeweiligen Biegeradius und von der jeweiligen Biegelänge. Eine solche Überbiegung ermöglicht einerseits den Ausgleich desjenigen Winkelbetrages α_{F}, um welchen sich der vormals flächige Gegenstand im Bereich des konkav und/oder konvex zu formenden Bereichs nach Abkühlung in Richtung der ursprünglichen (flächigen) Ausgangsform zurückbewegt. Zum anderen ermöglicht eine solche Überbiegung die Verkürzung von sowohl der Erwärm- bzw. Heizzeit als auch der Kühlzeit und somit der gesamten Standzeit.

Vorzugsweise wird der wenigstens eine flächige Gegenstand im wesentlichen im konkav und/oder konvex geformten Bereich zur schnellen und gezielten Wärmeabfuhr durch Umluft, Preßluft oder dergleichen abgekühlt.

In weiterer Ausgestaltung des erfindungsgemäßen Verfahrens nach Anspruch 8 wird der konkav und/oder konvex geformte Bereich formstabil gehalten bzw. bei vorhergehender Erwärmung und nachfolgender Abkühlung zusätzlich stabilisiert. Vorzugsweise wird die in ihre vorbestimmte Form verbrachte Gehäusefläche dabei mit den zwei weiteren im wesentlichen starr ausgebildeten, die in ihre vorbestimmte Form verbrachte Gehäusefläche aufnehmenden Gehäuseflächen mittels einer Nut-Feder- oder dergleichen -Verbindung, insbesondere einrastend, verbunden. Die Verbindung der einen konkav und/oder konvex geformten Bereich aufweisenden Gehäusefläche mit den beiden weiteren Gehäuseflächen zum Zwecke des Zusammenbaus des gesamten Gehäuses über eine solche Rast-, Schnapp- oder ähnlichen -Verbindung gestaltet sich ausgesprochen einfach.

Nach einem weiteren Merkmal des erfindungsgemäßen Verfahrens wird die in ihre vorbestimmte Form verbrachte Gehäusefläche über die Innenseite und alternativ bzw. kumulativ über die den zwei weiteren Gehäuseflächen jeweils zugewandten Stirnseiten der Gehäusefläche mittels der Nut-Feder- oder dergleichen - Verbindung an den beiden weiteren Gehäuseflächen angebracht. Auf diese Weise lassen sich Gehäuse, kubische Körper oder dergleichen unterschiedlichster Form erhalten.

Schließlich liegt es noch im Rahmen des erfindungsgemäßen Verfahrens, zwei einander zugewandte Stirnseiten des in die vorbestimmte Form verbrachten Gegenstands mittels einer Nut-Feder- oder dergleichen -Verbindung, insbesondere einrastend, gegenseitig oder mit Stirnseiten eines weiteren in die vorbestimmte Form verbrachten Gegenstands zu verbinden, wodurch sich ohne weiteres Rohre unterschiedlichsten Querschnitts und verschiedenster Länge herstellen lassen.

Des weiteren wird diese Aufgabe in vorrichtungstechnischer Hinsicht zum einen durch die kennzeichnenden Maßnahmen des Anspruchs 9 gelöst.

Durch die erfindungsgemäße Ausbildung und Anordnung einer im wesentlichen ebenflächigen Auflage, wenigstens einer Schablone mit einem konkav geformten, d.h. auch nach innen rund geformten oder gewölbten, Bereich, die auf der ebenflächigen Auflage etwa senkrecht zur Erzeugenden des konkav und/oder konvex zu formenden Bereichs des flächigen Gegenstands verlaufend verschiebbar angeordnet ist, zwei Transportvorrichtungen zum Halten, Verbringen und Verbinden von zwei weiteren im wesentlichen starr ausgebildeten, seitlichen und die von der Schablone in ihrer vorbestimmten Form gehaltene Gehäusefläche aufnehmenden Gehäuseflächen, die auf der auf der ebenflächigen Auflage etwa in Richtung der Erzeugenden des konkav und/oder konvex zu formenden Bereichs des flächigen Gegenstands verlaufend verschiebbar angeordnet sind, sowie einer Steuereinheit zur Steuerung und Koordination der Auflage, der wenigstens einen Schablone und der beiden Transportvorrichtungen ist eine kompakte, betriebssichere und zugleich unabhängig von der jeweiligen Stückzahl wirtschaftlich arbeitende Vorrichtung zur Herstellung von Gehäusen, kubischen Körpern, Rohren oder dergleichen aus im wesentlichen flächigen Gegenständen, wie Platten oder dergleichen, aus thermisch erweich- bzw. schmelzbarem Material, z.B. aus Metall, Kunststoff etc., bereitgestellt. Die erfindungsgemäße Vorrichtung zeichnet sich dabei auch besonders durch Eignung zu serieller Fertigung aus. Auch lassen sich mit der erfindungsgemäßen Vorrichtung Gegenstände ausgesprochen exakt fertigen, und zwar ohne daß Nacharbeiten oder dergleichen notwendig sind. Infolge der mit der erfindungsgemäßen Vorrichtung erzielbaren Automatisierung werden schließlich der Arbeitsaufwand und damit zusammenhängend die Personalkosten erheblich verringert. Zudem gestaltet sich die eigentliche Kaltverformung wenigstens eines der zu mindestens einer Gehäusefläche mit einem konkav und/oder konvex geformten Bereich zu bildenden flächigen Gegenstands mittels der mindestens einen Schablone ausgesprochen einfach. Schließlich stellt die Steuereinheit, die alle fertigungsspezifischen Daten permanent erfaßt, aktualisiert, überwacht und gegebenenfalls korrigierend eingreift, ein Höchstmaß an Präzision der gefertigten Gehäuse, kubischen Körper, Rohre oder dergleichen sicher. Infolgedessen dient die Steuereinheit auch der Qualitätskontrolle jedes einzelnen Gehäuses usw.

Vorteilhafte Ausgestaltungen der erfindungsgemäßen Vorrichtung sind in Anspruch 10 beschrieben, wodurch sich eine zusätzliche Automatisierung erreichen läßt.

Diese Aufgabe in vorrichtungstechnischer Hinsicht zum anderen durch die kennzeichnenden Maßnahmen des Anspruchs 11 gelöst.

Durch die erfindungsgemäße Ausbildung und Anordnung einer im wesentlichen ebenflächigen Auflage, einer Heizeinrichtung, wenigstens einer Schablone mit einem konkav geformten, d.h. nach innen auch rund geformten oder gewölbten, Bereich, die auf der ebenflächigen Auflage etwa senkrecht zur Erzeugenden des konkav und/oder konvex zu formenden Bereichs des flächigen Gegenstands verlaufend verschiebbar angeordnet ist, sowie einen Steuereinheit zur Steuerung und Koordination der Auflage, der Heizeinrichtung und der wenigstens einen Schablone ist eine kompakte, betriebssichere und zugleich unabhängig von der jeweiligen Stückzahl wirtschaftlich arbeitende Vorrichtung zur Herstellung von Gehäusen, kubischen Körpern, Rohren oder dergleichen aus im wesentlichen flächigen Gegenständen, wie Platten oder dergleichen, aus thermisch erweich- bzw. schmelzbarem Material, z.B. aus Metall, Kunststoff etc., zur Verfügung gestellt. Die erfindungsgemäße Vorrichtung entsprechend Anspruch 11 zeichnet sich dabei durch die gleichen Vorteile wie die erfindungsgemäße Vorrichtung nach Anspruch 9 aus. Zusätzlich kommt jedoch hinzu kommt, daß sich durch die Warmverformung ohne Mehraufwand eine weitere Erhöhung der Formstabilität der konkav und/oder konvex geformten Gehäusefläche erreichen läßt.

Vorteilhafte Ausgestaltungen der erfindungsgemäßen Vorrichtung sind in den Ansprüchen 12 bis 17 beschrieben.

Die Merkmale des Anspruchs 12 gewährleisten eine automatische, zudem schnelle und exakte Positionierung des jeweiligen flächigen Gegenstands auf der Auflage.

Konstruktiv läßt sich dies besonders vorteilhaft dadurch erreichen, daß die Positioniereinrichtung wenigstens einen Schieber oder dergleichen umfaßt, der im Randbereich der Auflage angeordnet und oberhalb der Auflage in den vom Randbereich aufgespannten Zentralbereich der Auflage hinein- bzw. aus diesem herausbewegbar ist.

Des weiteren liegt es im Rahmen der Erfindung, der Auflage eine CO₂-Lasereinrichtung, HeNe-Lasereinrichtung oder dergleichen Lasereinrichtung zur Messung einer Ist-Position des Gegenstands auf der Auflage zuzuordnen, wobei die CO₂-Lasereinrichtung, die HeNe-Lasereinrichtung oder dergleichen Lasereinrichtung mit der Steuereinheit zum Vergleich der Ist-Position des Gegenstands auf der Auflage mit der vorbestimmten Soll-Position verbunden ist. Dies ermöglicht eine permanente Überprüfung der momentanen Position des jeweiligen Gegenstands auf der Auflage und der Überwachung der Länge, Parallelität etc. des Gegenstands während der Verformung in dessen konkav und/oder konvex zu formenden Bereichs. Dies wiederum fördert die Fertigungsgenauigkeit insgesamt.

Um den flächigen Gegenstand unabhängig von seiner Dicke auf der Auflage während der Verformung des konkav und/oder konvex zu formenden Bereichs des Gegenstands ausreichend, dennoch lösbar zu befestigen, ist gegebenenfalls mindestens eine Andruckeinrichtung zur lösbaren Befestigung des Gegenstands auf der Auflage nach Anspruch 13 oberhalb der Auflage vertikal bewegbar angeordnet und vorzugsweise mit der Steuereinheit zum Empfang und/oder zur Rückführung elektrischer Signale verbunden sowie von der Steuereinheit betätigbar.

In weiterer Ausgestaltung der Erfindung ist als Andruckeinrichtung wenigstens ein, vorzugsweise sich längs des konkav und/oder konvex zu formenden Bereichs des Gegenstands erstreckender und zu dem Bereich seitlich geringfügig beabstandet angeordneter Niederhalter vorgesehen.

Der bzw. die Niederhalter ist bzw. sind in diesem Zusammenhang mit der Oberfläche des Gegenstands linienförmig und/oder punktförmig in Kontakt bringbar.

Von außerordentlichem Interesse für eine schnelle und präzise Erweichung bzw. Schmelzung des konkav und/oder konvex zu formenden Bereichs des Gegenstands ist entsprechend dem Anspruch 14 eine Heizeinrichtung vorgesehen, die vorzugsweise wenigstens ein Heißluftgebläse oder dergleichen umfaßt. Auf diese Weise läßt sich eine ganz gezielt einbringbare (flächige) Wärmeentwicklung und Wärmezufuhr zur Erweichung bzw. Schmelzung des Gegenstands in dem konkav und/oder konvex zu formenden Bereich erhalten. Ebenso kann Wärme punktuell und zeitlich exakt zugeführt werden, so daß das Material des Gegenstands schonend behandelbar ist.

Darüber hinaus ist es bevorzugt, daß das Heißluftgebläse oder dergleichen entlang des konkav und/oder konvex zu formenden Bereichs des Gegenstands an der Andrucheinrichtung, beispielsweise an einer Schiene oder dergleichen, insbesondere an dem Niederhalter, verfahrbar angeordnet ist. Die erfindungsgemäße Vorrichtung erhält hierdurch zusätzlich einen kompakten Aufbau. Die gezielte Erwärmung kann außerdem während einer Linearbewegung des Heißluftgebläses erfolgen.

Vorteilhafterweise ist weiterhin zur Vermeidung einer Überhitzung des flächigen Gegenstands in dem konkav und/oder konvex zu formenden Bereich vorgesehen, daß der Heizeinrichtung eine Temperaturmeßeinrichtung zum Messen der Temperatur in dem zu erweichenden oder zu schmelzenden Bereich des Gegenstands zugeordnet ist, der mit der Steuereinheit verbunden ist.

Zur zusätzlichen Automatisierung der erfindungsgemäßen Vorrichtung dienen die Merkmale nach Anspruch 15.

Nach einem weiteren Merkmal der Erfindung ist die Antriebseinrichtung zur Verschiebung der wenigstens einen Schablone etwa senkrecht zur Erzeugenden des konkav und/oder konvex zu formenden Bereichs mit der Steuereinheit verbunden und von dieser betätigbar, so daß der Verformungsvorgang automatisch stattfinden kann.

Es ist entsprechend dem Anspruch 16 weiter vorteilhaft, wenn die Schablone im konkav geformten Bereich mit einer Überbiegung um einen Winkel, von vorzugsweise etwa 3°, ausgstattet ist. Hierdurch läßt sich auf einfache Weise ein abkühlbedingter Rückfederungswinkel α_{F} im konkav und/oder konvex geformten Bereich des Gegenstands ausgleichen.

Durch die erfindungsgemäße Ausgestaltung der Vorrichtung nach Anspruch 17 wird der Verformungszustand des Materials von dem zu erweichenden bzw. zu schmelzenden Gegenstand im konkav und/oder konvex zu formenden Bereich zusätzlich festgehalten.

Dabei ist die Druckmeßeinrichtung zweckmäßig mit der Steuereinheit verbunden und weist wenigstens einen Drucksensor auf, der in der Schablone versenkbar aufgenommen ist, und einen in Bewegungsrichtung der Schablone federbelasteten Stift, ein piezoelektrisches Element oder dergleichen als elektrischen Kontaktgeber umfaßt. Mit zunehmender Erwärmung wird der Drucksensor mehr und mehr entlastet. Bei Erreichen eines bestimmten Druckwertes, der in Abhängigkeit der Materialstärke, des zu erweichenden bzw. zu schmelzenden Materials, wie beispielsweise Polystyren, ABS, Acryl, Makrolon, Impax etc. empirisch zuvor ermittelt ist, wird der Steuereinheit ein entsprechendes Signal zugeführt.

Von besonderem Interesse für eine ausgesprochen rationelle Herstellung von Gehäusen oder dergleichen aus im wesentlichen flächigen Gegenständen mit wenigstens einer konkav und/oder konvex geformten Gehäusefläche ist bei der erfindungsgemäßen Vorrichtung weiterhin die konstruktive Ausgestaltung, zwei einander gegenüberliegende Schablonen mit einem konvex und/oder konkav geformten Bereich vorzusehen, die jeweils auf der ebenflächigen Auflage etwa senkrecht zur Erzeugenden der konkav und/oder konvex zu formenden Bereiche des flächigen Gegenstands verlaufend aufeinander zu und voneinander weg verschiebbar angeordnet sind. Hierdurch ist sichergestellt, daß der flächige Gegenstand in zwei voneinander beabstandeten Bereichen gleichzeitig einer konkaven und/oder konvexen Verformung, Rundung, Wölbung etc. unterzogen werden kann. Ebenso ist es denkbar, einen ausgesprochen großflächigen, zusammenhängenden Bereich des flächigen Gegenstands, beispielsweise zu einem Rohr oder rohrförmigen Körper auszuformen. In beiden Fällen wird die Fertigungsgeschwindigkeit durch die beiden zusammenwirkenden Schablonen wesentlich erhöht.

Es ist in vorteilhafter Ausgestaltung der erfindungsgemäßen Vorrichtung darüber hinaus vorgesehen, der Auflage im konkav und/oder konvex geformten Bereich der Gehäusefläche des flächigen Gegenstands eine Abkühleinrichtung zur raschen Abkühlung bzw. Verfestigung des erweichten bzw. geschmolzenen Bereichs, die insbesondere ein Gebläse, eine Preßlufteinrichtung oder dergleichen umfaßt, zuzuordnen.

Zudem ist erfindungsgemäß vorgesehen, die Abkühleinrichtung an einer Schiene, insbesondere an der Andruckeinrichtung, vorzugsweise an dem Niederhalter, entlang des konkav und/oder konvex geformten Bereichs der Gehäusefläche verfahrbar anzuordnen, mit der Steuereinheit zu verbinden und von der Steuereinheit betätigen zu lassen. Als zusätzlichen Vorteil bringt eine derartige konstruktive Ausgestaltung einerseits eine wesentliche Verringerung der Abkühlzeit und damit einhergehend der gesamten Fertigungsphase des Gehäuses und andererseits eine Verbesserung der Automation mit sich.

Zur weiteren Automatisierung liegt es noch im Rahmen der erfindungsgemäßen Vorrichtung, daß der Auflage Transporteinrichtungen zum Antransport des flächigen Gegenstands von einer vorhergehenden Bearbeitungsstation bzw. zum Abtransport der konkav und/oder konvex geformten Gehäusefläche zu einer nachfolgenden Bearbeitungsstation vor- und/oder nachgeordnet sind.

Die der Erfindung zugrunde liegende Aufgabe wird schließlich noch in gegenständlicher Hinsicht durch die kennzeichnenden Merkmale des Anspruchs 18 gelöst, wodurch die Gehäuse, kubischen Körper, Rohre oder dergleichen aus im wesentlichen flächigen Gegenständen, welche aus Kunststoff oder dergleichen, insbesondere thermisch erweich- bzw. schmelzbarem Material bestehen, konstruktiv einfach, kompakt und maßgenau ausgestaltet sind.

Vorteilhafte konstruktive Maßnahmen bezüglich des erfindungsgemäßen Gehäuses oder dergleichen sind in den Ansprüchen 19 bis 25 beschrieben.

Vorteilhafterweise beträgt die Materialdicke des jeweiligen flächigen Gegenstands von der wenigstens einen Gehäusefläche entsprechend den Merkmalen des Anspruchs 19 im konkav und/oder konvex zu formenden Bereich etwa zwischen 10 und 40%, insbesondere circa 25%, der Materialdicke des flächigen Gegenstands.

Von ganz besonderem Interesse für das erfindungsgemäße Gehäuse oder dergleichen sind die Maßnahmen der Ansprüche 20 und 21, wonach die wenigstens eine Gehäusefläche im wesentlichen im konkav und/oder konvex geformten Bereich mit Nuten oder dergleichen Ausnehmungen versehen ist, welche etwa parallel zueinander und etwa senkrecht zur Erzeugenden des konkav und/oder konvex geformten Bereichs bzw. zur Erzeugenden der Rundung, Wölbung etc. verlaufen. Auf diese Weise läßt sich eine Gehäusefläche mit einem ausgesprochen gleichförmigen konkav und/oder konvex gebildeten Bereich bzw. einer gleichmäßigen Rundung, Wölbung usw. erhalten, und zwar selbst bei großem Biegeradius und großer Biegelänge in Richtung der Erzeugenden. Gleichzeitig ist neben einer genügend großen Flexibilität bzw. Biegbarkeit des flächigen Gegenstands vor und bei der Verformung eine besonderes hohe Formstabilität der Gehäusefläche mit dem konkav und/oder konvex geformten Bereich gewährleistet. Das Gehäuse oder dergleichen ist somit zum einen einfach herstellbar und zum anderen insgesamt ausgesprochen stabil und gegen äußere Einwirkungen verhältnismäßig unempfindlich.

Von zusätzlichem Vorteil sind in diesem Zusammenhang die Merkmale des Anspruchs 22. Durch sämtliche dieser vorgenannten konstruktiven Maßnahmen ist es ohne weiteres möglich, die Gehäuse, kubischen Körper, Rohre oder dergleichen entsprechend ihrer Form, Gestalt und gegebenenfalls gemäß ihrer jeweils durch die Verwendung gestellten Anforderungen sowie nach den Eigenschaften des ausgewählten Materials individuell anzupassen.

Zweckmäßigerweise sind die Nuten oder dergleichen Ausnehmungen gemäß Anspruch 23 an der Innenseite der wenigstens einen Gehäusefläche im konkav und/oder konvex geformten Bereich vorgesehen.

Zweckmäßigerweise besitzen die Nuten oder dergleichen Ausnehmungen eine Tiefe von etwa 0,05 mm bis circa 0,5 mm, insbesondere von etwa 0,3 mm.

Darüber hinaus sind die Nuten oder dergleichen Ausnehmungen vorzugsweise gemäß Anspruch 24 endseitig etwa in Richtung der Erzeugenden des konkav und/oder konvex zu formenden Bereichs verlaufend begradigt.

Weiterhin liegt es im Rahmen der Erfindung nach Anspruch 25, daß die in ihre vorbestimmte Form verbrachte Gehäusefläche mit mindestens zwei weiteren Gehäuseflächen, die im wesentlichen starr ausgebildet sind, mittels einer Nut-Feder- oder dergleichen -Verbindung, insbesondere einrastend verbindbar ist. Abgesehen von einem sich auf diese Weise ausgesprochen einfach gestaltenden Zusammenbau des Gehäuses, kubischen Körpers oder dergleichen wird die Gehäusefläche mit dem konkav und/oder konvex geformten Bereich, d.h. der nach innen und/oder außen gerichteten Rundung, Wölbung etc., durch die beiden weiteren Gehäuseflächen gehalten bzw. im Fall einer vorhergehenden Erwärmung und anschließenden Abkühlung des konkav und/oder konvex zu formenden Gegenstands zusätzlich stabilisiert.

Zu diesem Zweck ist die wenigstens eine Gehäusefläche über die Innenseite der Gehäusefläche mittels der Nut-Feder- oder dergleichen -Verbindung an wenigstens einer der zwei weiteren Gehäuseflächen anbringbar. In alternativer Ausgestaltung kann die wenigstens eine Gehäusefläche ebenso über die den zwei weiteren Gehäuseflächen jeweils zugewandten Stirnseiten der Gehäusefläche mittels der Nut-Feder- oder dergleichen -Verbindung an wenigstens einer der zwei weiteren Gehäuseflächen anbringbar sein. Insbesondere ist die Nut-Feder- oder dergleichen -Verbindung in letzterem Fall erfindungsgemäß derart ausgebildet, daß die Außenseite der wenigstens einen Gehäusefläche mit den Stirnseiten der zwei weiteren Gehäuseflächen fluchtet bzw. gegenüber den Stirnseiten der zwei weiteren Gehäuseflächen versetzt angeordnet ist.

Des weiteren ist erfindungsgemäß vorgesehen, daß zwei einander zugewandte Stirnseiten der in ihre vorbestimmte Form verbrachten Gehäusefläche gegenseitig mittels einer Nut-Feder- oder dergleichen -Verbindung, insbesondere einrastend, verbindbar sind, um auf diese Weise eine Mantelfläche eines Rohres oder sonstigen hohlzylindrischen Körpers mit einer einzigen Stoßnaht zu bilden.

Weitere Merkmale, Vorteile und Einzelheiten der Erfindung ergeben sich aus der nachfolgenden Beschreibung einiger bevorzugter Ausführungsformen der Erfindung sowie anhand der Zeichnungen. Hierbei zeigen:
- Fig. 1: eine schematische, perspektivische Ansicht einer Ausführungsform einer erfindungsgemäßen Vorrichtung;
- Fig. 2: eine schematische, perspektivische Ansicht einer weiteren Ausführungsform einer erfindungsgemäßen Vorrichtung;
- Fig. 3: eine Seitenansicht einer Ausführungsform einer erfindungsgemäß ausgebildeten Schablone mit einer Ausführungsform eines erfindungsgemäßen flächigen Gegenstands entsprechend Fig. 1 in vergrößertem Maßstab;
- Fig. 4: eine Draufsicht auf die Ausführungsform der Schablone mit dem flächigen Gegenstand nach Fig. 3;
- Fig. 5: eine Seitenansicht einer Ausführungsform einer erfindungsgemäße ausgebildeten Schablone mit einer anderen Ausführungsform eines erfindungsgemäßen flächigen Gegenstands entsprechend Fig. 1 in vergrößertem Maßstab;
- Fig. 6: eine Draufsicht auf die Ausführungsform der Schablone mit dem flächigen Gegenstand nach Fig. 5;
- Fig. 7: eine Seitenansicht einer Ausführungsform einer erfindungsgemäß ausgebildeten Schablone mit einer weiteren Ausführungsform eines erfindungsgemäßen flächigen Gegenstands entsprechend Fig. 1 in vergrößertem Maßstab;
- Fig. 8: eine Draufsicht auf die Ausführungsform der Schablone mit dem flächigen Gegenstand nach Fig. 7;
- Fig. 9: ein teilweise abgebrochener Querschnitt durch den flächigen Gegenstand entsprechend Ausschnitt IX in Fig. 3 in vergrößertem Maßstab;
- Fig. 10: eine perspektivische Ansicht einer Ausführungsform eines erfindungsgemäß ausgebildeten Gehäuses;
- Fig. 11: eine Seitenansicht auf die Ausführungsform des Gehäuses nach Fig. 10 in verkleinertem Maßstab;
- Fig. 12: einen teilweise abgebrochenen Querschnitt durch eine Ausführungsform einer Nut-Feder- oder dergleichen - Verbindung zwischen zwei Gehäuseflächen in vergrößertem Maßstab;
- Fig. 13: einen teilweise abgebrochenen Querschnitt durch eine andere Ausführungsform einer Nut-Feder- oder dergleichen -Verbindung zwischen zwei Gehäuseflächen in vergrößertem Maßstab;
- Fig. 14: einen teilweise abgebrochenen Querschnitt durch eine andere Ausführungsform einer Nut-Feder- oder dergleichen -Verbindung zwischen zwei Gehäuseflächen in vergrößertem Maßstab;
- Fig. 15: einen mittleren Querschnitt durch eine andere Ausführungsform eines erfindungsgemäßen Gehäuses;
- Fig. 16: einen teilweise abgebrochenen Querschnitt durch das Gehäuse nach Fig. 15 entsprechend Ausschnitt XVI zur Verdeutlichung des Rückfederungswinkel α_{F};
- Fig. 17: eine perspektivische Ansicht eines erfindungsgemäß ausgebildeten Rohres oder hohlzylindrischen Körpers; und
- Fig. 18: eine schematische, perspektivische Ansicht auf eine Ausführungsform der erfindungsgemäßen Vorrichtung mit einem konkav und/oder konvex zu formenden Gegenstand in einem ersten Verfahrensschritt;
- Fig. 19: eine schematische, perspektivische Ansicht auf eine Ausführungsform der erfindungsgemäßen Vorrichtung mit einem konkav und/oder konvex zu verformenden Gegenstand in einem zu Fig. 19 nachfolgenden Verfahrensschritt;
- Fig. 20: eine schematische, perspektivische Ansicht auf eine Ausführungsform der erfindungsgemäßen Vorrichtung mit einem konkav und/oder konvex zu verformenden Gegenstand in einem zu Fig. 19 nachfolgenden Verfahrensschritt;
- Fig. 21: eine schematische Darstellung eines erfindungsgemäß ausgebildeten Schaftfräsers.
- Fig. 22: eine schematische, perspektivische Ansicht auf eine Ausführungsform der erfindungsgemäßen Vorrichtung mit einem konkav und/oder konvex zu verformenden Gegenstand in einem zu Fig. 20 nachfolgenden Verfahrensschritt;
- Fig. 23: eine schematische, perspektivische Ansicht auf eine Ausführungsform der erfindungsgemäßen Vorrichtung mit einem konkav und/oder konvex zu verformenden bzw. geformten Gegenstand in einem zu Fig. 22 nachfolgenden Verfahrensschritt;
- Fig. 24: eine schematische, perspektivische Ansicht auf eine Ausführungsform der erfindungsgemäßen Vorrichtung mit einem konkav und/oder konvex geformten Gegenstand in einem zu Fig. 23 nachfolgenden Verfahrensschritt; und
- Fig. 25: eine schematische, perspektivische Ansicht auf eine Ausführungsform der erfindungsgemäßen Vorrichtung mit einem konkav und/oder konvex geformten Gegenstand in einem zu Fig. 24 nachfolgenden Verfahrensschritt.

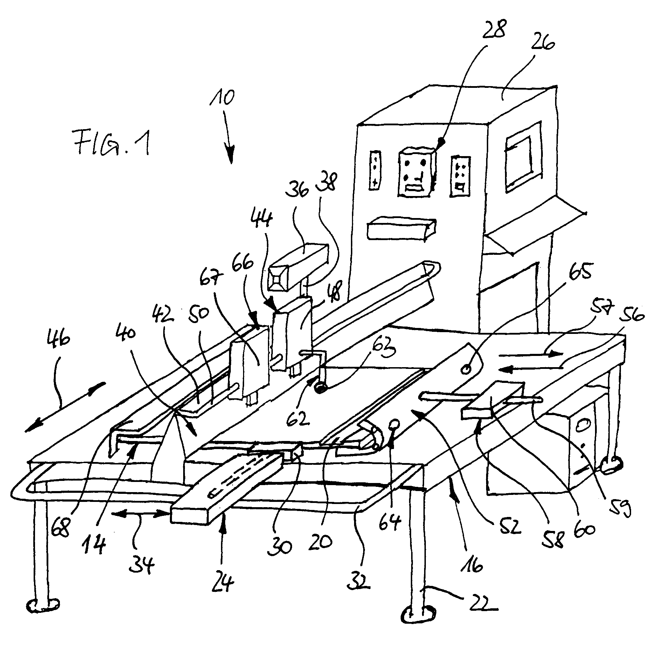

In Fig. 1 ist eine Ausführungsform einer erfindungsgemäßen Vorrichtung 10 zur Herstellung von hier nicht dargestellten Gehäusen 12 oder dergleichen aus im wesentlichen flächigen Gegenständen 14, wie Platten oder dergleichen, aus thermisch erweich- bzw. schmelzbarem Material gezeigt. Bei dem erweich-bzw. schmelzbaren Material kann es sich um Metall oder auch Kunststoff, wie z.B. um ein Polymer oder einen Thermoplasten, insbesondere um Polystyren, ABS, Acryl, Makrolon und Impax oder sonstiges extrudiertes Material, mit oder ohne eine Verstärkung aus Glasfaser, Kohlefaser usw., handeln.

Die in Fig. 1 dargestellte Vorrichtung 10 umfaßt eine im wesentlichen ebenflächige Auflage 16 zur Abstützung wenigstens eines flächigen Gegenstands 14, der zu mindestens einer Gehäusefläche 18 mit einem konkav und/oder konvex geformten Bereich 20' bzw. einer nach innen und/oder nach außen gerichteten Rundung, Wölbung etc. gebildet, d.h. verformt wird. Die Auflage 16 besteht beispielhaft aus einer Marmorplatte oder dergleichen, die an einem Gestell 22 aus Stahl oder dergleichen aufgehängt ist.

Der Auflage 16 ist eine, insbesondere mechanisch, elektrisch, pneumatisch oder hydraulisch betätigbare, Positioniereinrichtung 24 zum Verbringen des flächigen Gegenstands 14 in eine vorbestimmte Soll-Position zugeordnet. Die Positioniereinrichtung 24 ist mit einer in einem Steuerschrank 26 oder dergleichen untergebrachten Steuereinheit 28 zur Entgegennahme und/oder Rückführung elektrischer Signale verbunden und von der Steuereinheit 28 betätigbar.

Gemäß Fig. 1 umfaßt die Positioniereinrichtung 24 wenigstens einen Schieber 30 oder dergleichen, der im Randbereich der Auflage 16 angeordnet und oberhalb der Auflage 16 in den vom Randbereich aufgespannten Zentralbereich der Auflage 16 hinein- bzw. aus diesem herausbewegbar ist. Der Schieber 30 ist hier von einer längs zur Auflage 16 verlaufenden Schiene 32 oder dergleichen aufgenommen, um über eine nicht näher gezeigte Antriebseinrichtung entsprechend der jeweiligen Größe des Gegenstands 14 in Richtung des Doppelpfeils 34 längs der Auflage 16 bewegt bzw. verfahren werden zu können.

Weiterhin ist die Vorrichtung 10 mit einer CO₂-Lasereinrichtung, HeNe-Lasereinrichtung oder dergleichen Lasereinrichtung 36 zur Messung einer Ist-Position des Gegenstands 14 auf der Auflage 16 ausgestattet. Die der Auflage 16 zugeordnete CO₂-Lasereinrichtung, HeNe-Lasereinrichtung oder dergleichen Lasereinrichtung 36 ist zum Beispiel seitlich der Auflage 16 von einem Träger 38 aufgenommen, der an dem Gestell 22 befestigt ist. Um die Ist-Position des Gegenstands 14 auf der Auflage 16 mit einer vorbestimmten Soll-Position zu vergleichen, ist die CO₂-Lasereinrichtung, HeNe-Lasereinrichtung oder dergleichen Lasereinrichtung 36 auch mit der Steuereinheit 28 zur Übertragung bzw. Weitergabe von elektrischen Signalen verbunden.

Die Vorrichtung 10 entsprechend Fig. 1 weist darüber hinaus eine Andruckeinrichtung 40 oder dergleichen zur lösbaren Befestigung des Gegenstands 14 auf der Auflage 16 auf, die oberhalb der Auflage 16 vertikal bewegbar angeordnet ist. Auf diese Weise können Gegenstände 14 verschiedener Dicke an der Auflage 16 festgelegt werden. Die Andruckeinrichtung 40 steht mit der Steuereinheit 28 zur Entgegennahme und/oder Rückführung elektrischer Signale in Verbindung und ist von der Steuereinheit 28 betätigbar.

Die Andruckeinrichtung 40 umfaßt wenigstens einen Niederhalter 42, der sich vorzugsweise längs des konkav und/oder konvex zu formenden Bereichs 20 des Gegenstands 14 erstreckt und zu dem Bereich 20 seitlich geringfügig beabstandet ist. Insofern kann der Niederhalter 42 den Gegenstand 14 unmittelbar neben dem konkav und/oder konvex zu formenden Bereich 20 mit Druck beaufschlagen. Einem außerhalb vorgegebener Toleranzen bzw. einen torsionsähnlichen Verformen des Gegenstands 14 ist somit entgegengewirkt. In diesem Zusammenhang kann der Niederhalter 42 mit der Oberfläche des Gegenstands 14 gleichermaßen linienförmig und/oder punktförmig in Kontakt gebracht sein.

Die Vorrichtung 10 weist zudem eine Heizeinrichtung 44 zur Erweichung bzw. Schmelzung des konkav und/oder konvex zu formenden Bereichs 20 des flächigen Gegenstands 14 auf. Die Heizeinrichtung 44 ist im wesentlichen in Richtung der Erzeugenden des konkav und/oder konvex zu formenden Bereichs 20 entsprechend dem Doppelpfeil 46 in Fig. 1, d.h. hier quer zur Auflage 16, bewegbar. Die Heizeinrichtung 44 umfaßt zur etwa flächigen Erweichung bzw. Schmelzung des konkav und/oder konvex zu formenden Bereichs 20 des Gegenstands 14 wenigstens ein Heißluftgebläse 48 oder dergleichen, das oberhalb der Auflage 16 angeordnet ist. Das Heißluftgebläse 48 oder dergleichen ist mit der Steuereinheit 28 zur Entgegennahme und/oder Rückführung elektrischer Signale verbunden und von der Steuereinheit 28 betätigbar.

Wie Fig. 1 deutlich zu entnehmen ist, ist das Heißluftgebläse 48 oder dergleichen entlang des konkav und/oder konvex zu formenden Bereichs 20 des Gegenstands 14 quer zur Auflage 16, d.h. ebenfalls etwa in Richtung der Erzeugenden des konkav und/oder konvex zu formenden Bereichs 20 des Gegenstands 14 gemäß Doppelpfeil 46 von einer Schiene 50 oder dergleichen verfahrbar aufgenommen. Vorzugsweise ist das Heißluftgebläse 48 über die Schiene 50 oder dergleichen an der Andruckeinrichtung 40, insbesondere an dem Niederhalter 42, entlang dieser bzw. diesem verfahrbar angeordnet, wodurch die Vorrichtung 10 zusätzlich konstruktiv kompakt ausgebildet ist.

Weiterhin ist der Auflage 16 wenigstens eine Schablone 52 mit einem konkav geformten Bereich 54 zugeordnet, die auf der ebenflächigen Auflage 16 etwa senkrecht zur Erzeugenden des konkav und/oder konvex zu formenden Bereichs 20 des flächigen Gegenstands 14 verlaufend, d.h. längs der Auflage 16 gemäß Pfeil 56 hin und gemäß Pfeil 57 her, verschiebbar ausgestaltet ist. Zu diesem Zweck ist eine Antriebseinrichtung 58 auf der ebenen flächigen Auflage 16 vorgesehen, die beispielsweise aus einer Zahnstange 59 und einem nicht näher dargestellten, motorgetriebenen Antriebsaggregat 60 gebildet ist. Die Antriebseinrichtung 58 zur Verschiebung der wenigstens einen Schablone 52 etwa senkrecht zur Erzeugenden des konkav und/oder konvex zu formenden Bereichs 20 ist selbst mit der Steuereinheit 28 verbunden und von dieser betätigbar.

Zum Ausgleich einen abkühlbedingten Rückfederungswinkel α_{F} im konkav und/oder konvex geformten Bereich 20' des Gegenstands 14 ist die Schablone 52 des weiteren in ihrem konkav geformten Bereich 54 mit einer sogenannten Überbiegung versehen. Vorzugsweise beträgt die Überbiegung in dem konkav geformten Bereich 54 der Schablone 52 einen Winkel von etwa 3°.

Des weiteren ist die Vorrichtung 10 mit einer Temperaturmeßeinrichtung 62 ausgestattet, die der Heizeinrichtung 44 zum Messen der Temperatur in dem zu erweichenden oder zu schmelzenden Bereich 20 des Gegenstands 14 zugeordnet ist und mit der Steuereinheit 28 verbunden ist. Bei der Temperaturmeßeinrichtung 62 kann es sich beispielhaft um Temperatursensoren 63 handeln, die oberhalb des konkav und/oder konvex zu formenden Bereich 20 des Gegenstands 14 geringfügig beabstandet angeordnet sind, die jeweils gerade vorherrschende Temperatur messen und an die Steuereinheit 28 weiterleiten. Auf diese Weise läßt sich eine für die Erweichung bzw. Schmelzung des Materials von dem Gegenstand 14 jeweils geeignete Temperatur von der Steuereinheit 28, die die Heizeinrichtung 44 steuert bzw. einregelt, einstellen. Eine Überhitzung und damit Zerstörung des Gegenstands 14 in dem konkav und/oder konvex zu formenden Bereich 20 ist infolgedessen sicher ausgeschlossen.

Die Vorrichtung 10 ist nach Fig. 1 zudem mit einer Druckmeßeinrichtung 64 zum Messen der Widerstandskraft in dem konkav und/oder konvex zu formenden bzw. gegebenenfalls zu erweichenden und/oder zu schmelzenden Bereich 20 des Gegenstands 14 versehen, die der wenigstens einen Schablone 52 zugeordnet ist. Auch die Druckmeßeinrichtung 64 ist mit der Steuereinheit 28 verbunden. Die Druckmeßeinrichtung 64 nach Fig. 1 umfaßt dabei einen oder mehrere Drucksensoren 65, die in der Schablone 52 versenkbar aufgenommen sind und einen in Bewegungsrichtung der Schablone 52 gemäß Pfeil 56 federbelasteten Stift, ein piezoelektrisches Element oder dergleichen als elektrischen Kontaktgeber aufweisen.

Der Auflage 16 ist schließlich noch im konkav und/oder konvex zu formenden bzw. geformten Bereich 20 bzw. 20' der Gehäusefläche 18 des flächigen Gegenstands 14 eine Abkühleinrichtung 66 zur Abkühlung bzw. Verfestigung des erweichten bzw. geschmolzenen Bereichs 20 zugeordnet. Die Abkühleinrichtung 66 umfaßt dabei ein Gebläse 67, eine Preßlufteinrichtung oder dergleichen. In Fig. 1 ist die Abkühleinrichtung 66 an einer Schiene, insbesondere an der Andruckeinrichtung 40, vorzugsweise an dem Niederhalter 42, entlang des konkav und/oder konvex geformten Bereichs 20' der Gehäusefläche 18 verfahrbar ausgebildet. Die Abkühleinrichtung 66 ist ebenfalls mit der Steuereinheit 28 verbunden und von der Steuereinheit 28 betätigbar.

Entsprechend Fig. 1 besitzt die Ausführungsform der Vorrichtung 10 lediglich eine Schablone 52. Auf der gegenüberliegenden Seite des Gegenstands 14 ist parallel zur Andruckeinrichtung 40 eine Anschlagleiste 68 oder dergleichen zur zusätzlichen Halterung des Gegenstands 14 auf der Auflage 16 vorgesehen.

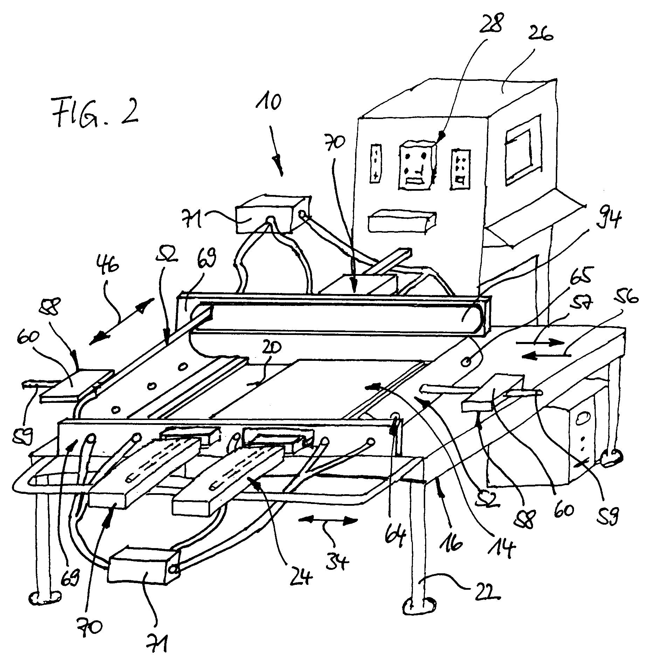

Demgegenüber ist bei der weiteren Ausführungsform der Vorrichtung 10 nach Fig. 2 anstatt der Anschlagleiste 68 eine zweite Schablone 52 mit einem konkav geformten Bereich 54 vorgesehen, die gleichfalls auf der ebenflächigen Auflage 16 etwa senkrecht zur Erzeugenden eines weiteren konkav und/oder konvex zu formenden Bereichs 20 des flächigen Gegenstands 14 verlaufend, d.h. entsprechend Pfeilen 56, 57 längs zur Auflage 16, verschiebbar angeordnet ist. In diesem Fall sind die beiden Schablonen 52 über entsprechende Antriebseinrichtungen 58 aufeinander zu und voneinander weg verfahrbar ausgestaltet.

Darüber hinaus sind bei dem Ausführungsbeispiel der Vorrichtung nach Fig. 2 zwei Transportvorrichtungen 69 zum Halten, Verbringen und Verbinden von zwei weiteren im wesentlichen starr ausgebildeten, seitlichen und die von der Schablone 52 in ihrer vorbestimmten Form gehaltene Gehäusefläche 18 aufnehmenden Gehäuseflächen 94, 96 vorhanden. Die beiden Transportvorrichtungen 69 sind auf der auf der ebenflächigen Auflage 16 etwa in Richtung der Erzeugenden des konkav und/oder konvex zu formenden Bereichs 20 des flächigen Gegenstands 14 verlaufend, d.h. in Richtung des Doppelpfeils 46, verschiebbar angeordnet.

Die Verschiebung auf der ebenflächigen Auflage 16 erfolgt dabei über eine Antriebseinrichtung 70, die jeder der beiden Transportvorrichtungen 69 zugeordnet ist. Die Antriebseinrichtungen 70 wiederum sind zur Verschiebung der Transportvorrichtungen 69 etwa in Richtung der Erzeugenden des konkav und/oder konvex zu formenden Bereichs 20 mit der Steuereinheit 28 verbunden und von der Steuereinheit 28 betätigbar ist.

Zur Halterung der zwei weiteren im wesentlichen starr ausgebildeten, seitlichen Gehäuseflächen 94, 96, welche die von der Schablone 52 in ihrer vorbestimmten Form gehaltene Gehäusefläche 18 aufnehmen, an den beiden Transportvorrichtungen 69 kann beispielsweise eine im einzelnen nicht näher beschriebene Vakuumeinrichtung 71 oder dergleichen vorgesehen sein.

Die Vakuumeinrichtung 71, die mit der Steuereinheit 28 verbunden und von dieser betätigbr ist, hält die beiden Gehäuseflächen 94, 96 somit für die vorbestimmte Zeit mittels Saugleitungen, an die ein Unterdruck angelegt ist. Die Zeit richtet sich dabei weitgehend nach der Dauer, die notwendig ist, die Transportvorrichtungen 69 nach Bestückung mit den beiden Gehäuseflächen 94, 96 hin zu der bzw. den Schablonen 52 in Richtung der Erzeugenden des konkav und/oder konvex geformten Bereichs 20' zu verschieben und die Nut-Feder- oder dergleichen -Verbindung zwischen der Gehäusefläche 18 und den zwei Gehäuseflächen 94, 98 zur Einrastung zu bringen. Unmittelbar anschließend wird der angelegte Unterdruck in den Saugleitungen der Vakuumeinrichtung 71 abgeschaltet, so daß die beiden Transportvorrichtungen 69 weg von der bzw. den Schablonen 52 in Richtung der Erzeugenden des konkav und/oder konvex geformten Bereichs 20' und in ihre Ausgangslage zurückgeschoben werden können, um erneut zwei Gehäuseflächen 94, 96 für die nächste zu formende Gehäusefläche 18 aufzunehmen.

Aufgrund der Tatsache, daß der flächige Gegenstand 14 mit der Ausführung der Vorrichtung 10 nach Fig. 2 insoweit ausschließlich kaltverformt wird, kann auf die Heizeinrichtung 44 und die Abkühleinrichtung 66 entsprechend der Ausführungsform der Vorrichtung gemäß Fig. 1 verzichtet werden. Zudem ist bei dem Ausführungsbeispiel der Vorrichtung 10 nach Fig. 2 keine Andruckeinrichtung 40 vorgesehen. Im übrigen aber stimmen die beiden Ausführungsformen der erfindungsgemäßen Vorrichtungen 10 nach den Fig. 1 und 2 weitgehend überein, so daß gleiche Bauteile mit gleichen Bezugsziffern versehen sind.

Letztendlich sind der Auflage 16 noch nicht dargestellte Transporteinrichtungen zum Antransport des flächigen Gegenstands 14 von einer vorhergehenden Bearbeitungsstation bzw. zum Abtransport der konkav und/oder konvex geformten Gehäusefläche 18 zu einer nachfolgenden Bearbeitungsstation vor- und/oder nachgeordnet.

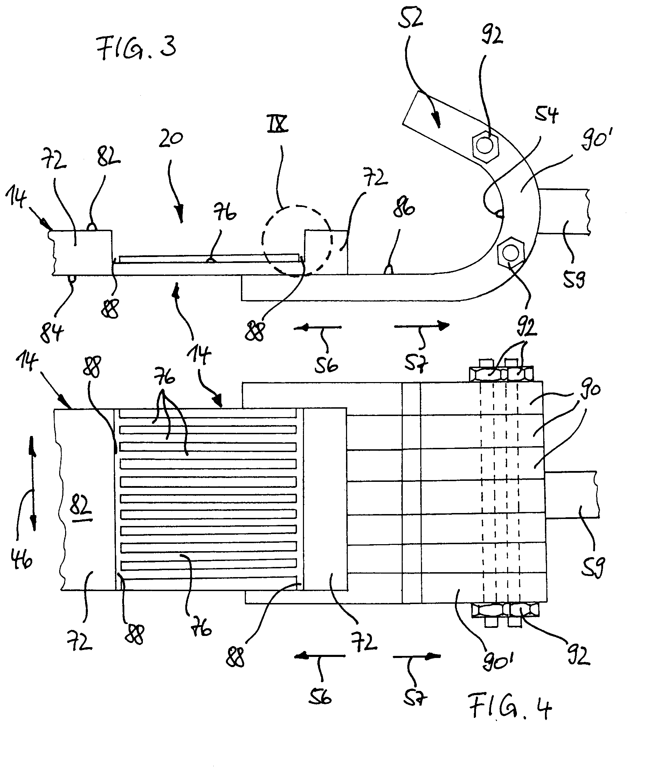

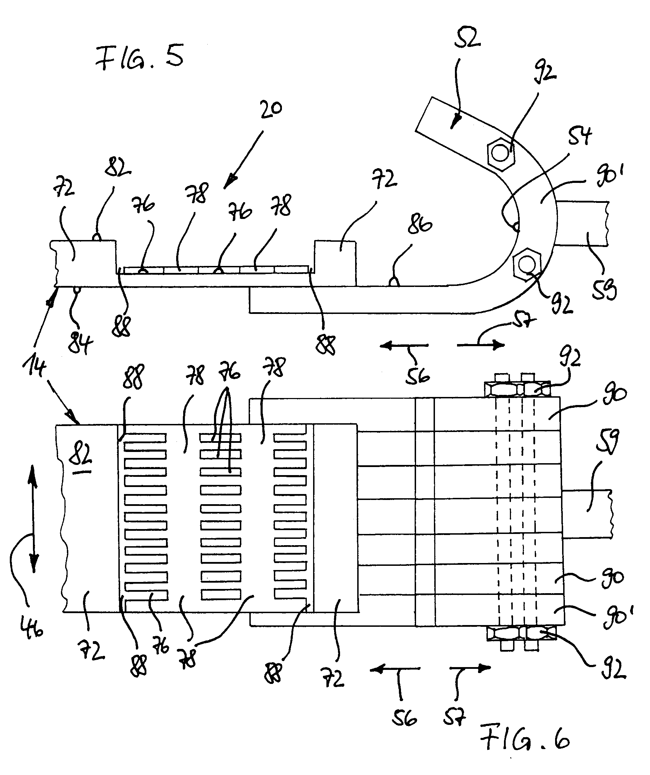

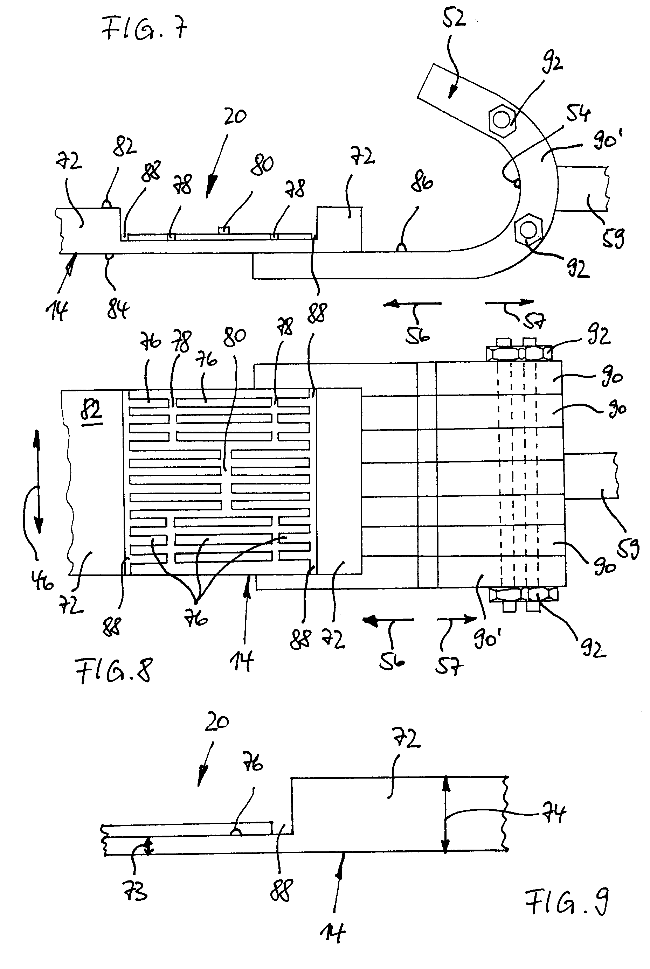

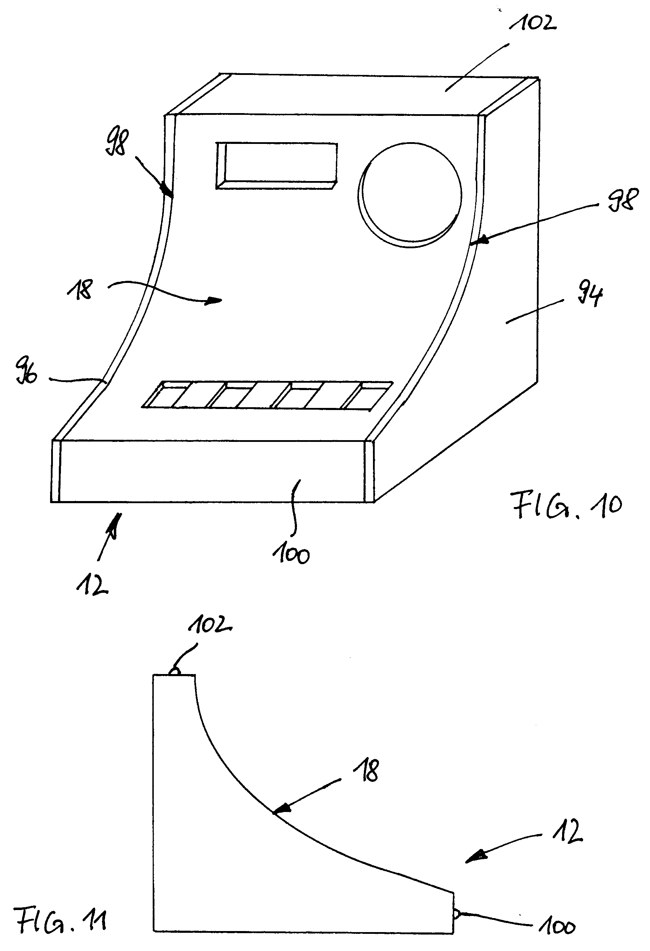

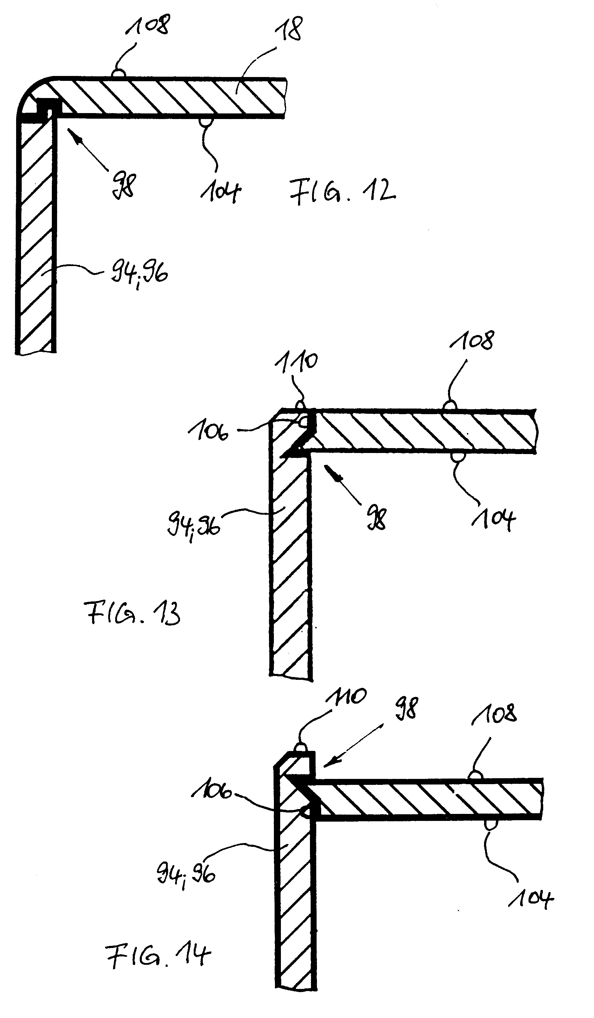

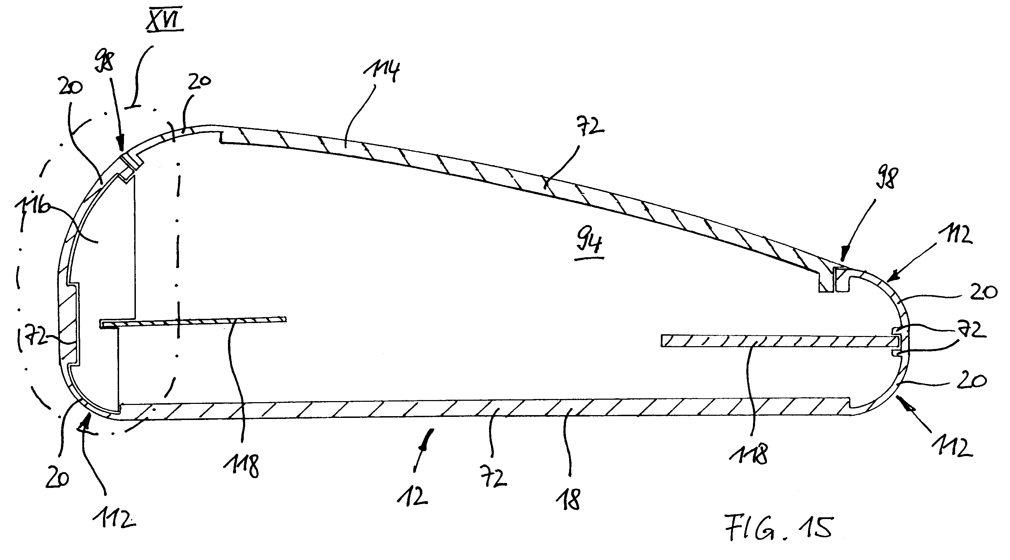

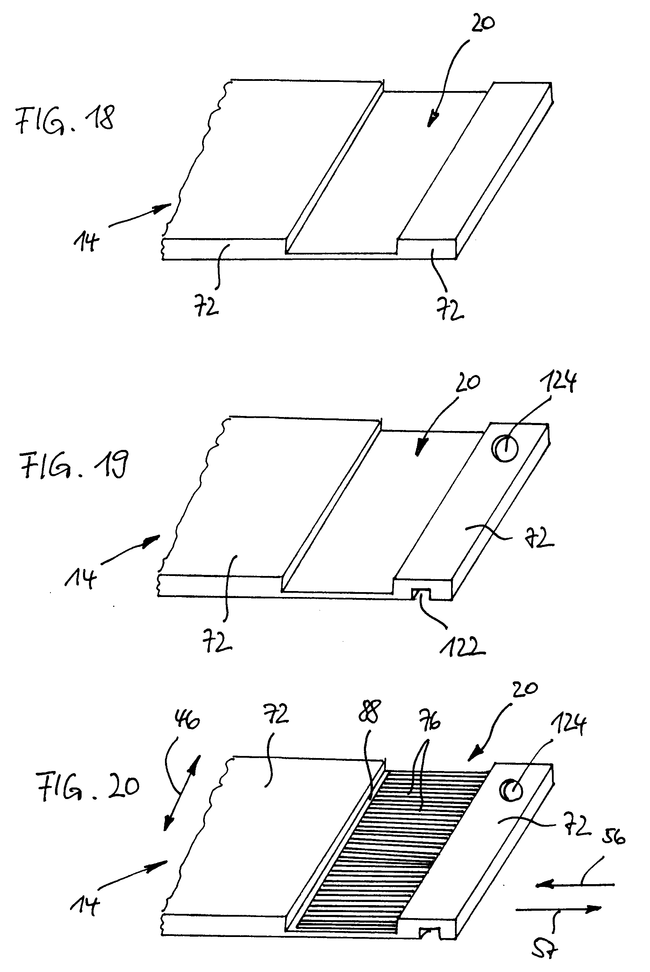

Der insbesondere in den Fig. 3 bis 9 dargestellte, im wesentlichen flächige Gegenstand 14, der vorzugsweise aus thermisch erweich- bzw. schmelzbarem Material wie Kunststoff besteht, bildet nachfolgend eine Gehäusefläche 18 mit einem konkav und/oder konvex geformten Bereich 20 eines Gehäuses 12. Der flächige Gegenstand 14 weist, wie insbesondere aus den Fig. 3, 5, 7 und 9 deutlich hervorgeht, im wesentlichen im konkav und/oder konvex zu formenden bzw. geformten Bereich 20 bzw. 20' der Gehäusefläche 18 eine geringere Materialdicke 73 als im übrigen Bereich 72 auf. Gemäß Fig. 8 beträgt die Materialdicke 73 des flächigen Gegenstands 14 von der wenigstens einen Gehäusefläche 18 im konkav und/oder konvex zu formenden Bereich 20 insbesondere etwa zwischen 10 und 40%, vorzugsweise circa 25%, der Materialdicke 74 des flächigen Gegenstands 14 im übrigen Bereich 72.

Nach den Fig. 3 bis 8 ist der im wesentlichen flächige Gegenstand 14 vorab bzw. die wenigstens eine Gehäusefläche 18 nachfolgend im wesentlichen im konkav und/oder konvex geformten Bereich 20 mit Nuten 76 oder dergleichen Ausnehmungen versehen. Die Nuten 76 oder dergleichen verlaufen dabei etwa parallel zueinander und ungefähr senkrecht zur Erzeugenden gemäß Doppelpfeil 46 des konkav und/oder konvex zu formenden bzw. geformten Bereichs 20, d.h. gemäß Fig. 1 längs zur Auflage 16 entsprechend den Pfeilen 56, 57 bzw. auch dem Doppelpfeil 34. Die Erzeugende selbst des konkav und/oder konvex zu formenden bzw. geformten Bereichs 20, 20' von dem flächigen Gegenstand 14 bzw. der Gehäusefläche 18 steht in den Fig. 3, 5 und 7 insoweit senkrecht zur Blattebene. Die Nuten 76 oder dergleichen Ausnehmungen weisen sämtlich eine Tiefe von etwa 0,05 mm bis circa 0,5 mm, insbesondere von 0,3 mm auf.

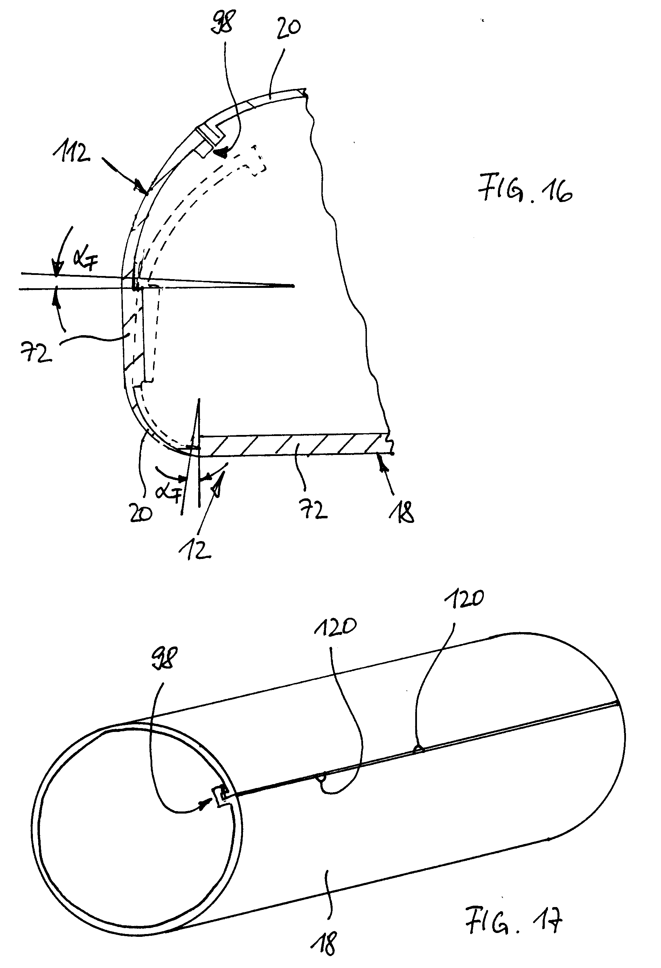

Bei der Ausführungsform des flächigen Gegenstands 14 nach den Fig. 2 und 4 sind die Nuten 76 oder dergleichen Ausnehmungen im wesentlichen durchgehend ausgebildet.

Demgegenüber sind bei dem weiteren Ausführungsbeispiel des flächigen Gegenstands 14 nach den Fig. 5 und 6 Nuten 76 oder dergleichen Ausnehmungen vorgesehen, die unterbrochen ausgebildet sind. Sämtliche Nuten 76 oder dergleichen Ausnehmungen sind insoweit von Stegen 78 oder dergleichen unterbrochen, die etwa in Richtung der Erzeugenden gemäß Doppelpfeil 46 des konkav und/oder konvex zu formenden bzw. geformten Bereichs 20 verlaufen.

Bei dem Ausführungsbeispiel des flächigen Gegenstands 14 nach den Fig. 7 und 8 ist schließlich wenigstens ein Teil der Nuten 76 oder dergleichen Ausnehmungen von Stegen 80 oder dergleichen unterbrochen, die ebenfalls ungefähr in Richtung der Erzeugenden gemäß Doppelpfeil 46 des konkav und/oder konvex zu formenden bzw. geformten Bereichs 20 verlaufen.

Entsprechend den Fig. 3 bis 9 sind die Nuten 76 oder dergleichen Ausnehmungen im konkav und/oder konvex zu formenden bzw. geformten Bereich 20 bzw. 20' vorzugsweise an derjenigen Seite des flächigen Gegenstands 14 vorgesehen, die der Innenseite der wenigstens einen späteren Gehäusefläche 18 entspricht. Bei den Ausführungsbeispielen nach den Fig. 3 bis 9 sind die Nuten 76 oder dergleichen Ausnehmungen daher in den flächigen Gegenstand 14 von dessen Oberseite 82 her eingebracht. Mit der Unterseite 84 liegt der flächige Gegenstand 14 demgegenüber auf der Auflage 16 und teilweise auf der Innenseite 86 der Schablone 52 auf.

Wie in den Fig. 3 bis 8 weiterhin dargestellt, sind die Nuten 76 oder dergleichen Ausnehmungen zusätzlich endseitig begradigt, und zwar etwa in Richtung der Erzeugenden gemäß Doppelpfeil 46 des konkav und/oder konvex zu formenden Bereichs 20. Eine solche Begradigung läßt sich beispielsweise durch die senkrecht zu den Nuten 76 verlaufenden beiden Nuten 88 erreichen.

Die Schablone 52 ist entsprechend den Fig. 3 bis 8 aus einer Vielzahl von etwa scheibenartigen Formelementen 90 gebildet, die miteinander über Schraubenverbindungen 92 oder dergleichen blockartig zusammengefaßt und gehalten sind. Abgesehen von einer einfachen Herstellung derartiger einzelner Formelemente 90, vor allem durch Eigenbau, läßt sich somit in vorteilhafter Weise die Schablone 52 ohne Aufwand beliebig, d.h. in ihrer Form und/oder Breite, ausgestalten.

Der konkav geformte Bereich 54 der Schablone 52, der quasi das Negativ darstellt, entspricht dabei in seiner Form im wesentlichen dem konkav und/oder konvex zu formenden Bereich 20 des Gegenstands 14, der quasi das Positiv darstellt, und umgekehrt. Zum Ausgleich eines Rückfederungswinkels α_{F}, vornehmlich durch Abkühlung bedingt, ist die Schablone 52 allerdings im konkav geformten Bereich 54 mit einer leichten Überbiegung versehen. So beträgt die Überbiegung einen Winkel von etwa 3°.

In den Fig. 10 und 11 ist ein Ausführungsbeispiel eines erfindungsgemäß hergestellten Gehäuses 12 gezeigt. Das Gehäuse 12 weist eine Gehäusefläche 18 auf, die im wesentlichen vollständig konkav geformt, d.h. nach innen gerichtet gerundet bzw. gewölbt ist. Die Gehäusefläche 18 besitzt somit einen konkav geformten Bereich 20', der verhältnismäßig groß ausgefallen ist. Des weiteren umfaßt das Gehäuse 12 zwei weitere Gehäuseflächen 94, 96, die im wesentlichen starr ausgebildet sind und die Gehäusefläche 18 aufnehmen. Dabei sind die Gehäusefläche 18 und die beiden weiteren, starr ausgebildeten Gehäuseflächen 94, 96 mittels einer Nut-Feder- oder dergleichen -Verbindung 98, insbesondere einrastend, miteinander verbindbar. Auch die weiteren Gehäuseflächen 100, 102 sowie die die Rückseite und die Unterseite bildenden Gehäuseflächen (nicht gezeigt) können über derartige Nut-Feder- oder dergleichen -Verbindungen 98 an den beiden weiteren, starr ausgebildeten Gehäuseflächen 94, 96 und gegebenenfalls an der Gehäusefläche 18 befestigt sein.

Gemäß Fig. 12 ist die wenigstens eine Gehäusefläche 18 über die Innenseite 104 der Gehäusefläche 18, d.h. über die vormalige Oberseite 82 des flächigen Gegenstands 14, mittels der Nut-Feder- oder dergleichen -Verbindung 98 an wenigstens einer der zwei weiteren Gehäuseflächen 94, 96 stirnseitig anbringbar.

Ebenso ist es entsprechend den Fig. 13 und 14 denkbar, die wenigstens eine Gehäusefläche 18 über deren Stirnseiten 106, welche den beiden weiteren Gehäuseflächen 94, 96 zugewandt sind, mittels der Nut-Feder- oder dergleichen -Verbindung 98 an wenigstens einer der beiden weiteren Gehäuseflächen 94, 96 zu befestigen. Dabei ist die Nut-Feder- oder dergleichen -Verbindung 98 nach Fig. 13 derart ausgebildet, daß die Außenseite 108 der wenigstens einen Gehäusefläche 18 mit den Stirnseiten 110 der zwei weiteren Gehäuseflächen 94, 96 fluchtet. Gemäß Fig. 12 ist die Nut-Feder- oder dergleichen -Verbindung 98 dagegen derart ausgebildet, daß die Außenseite 108 der wenigstens einen Gehäusefläche 18 gegenüber den Stirnseiten 110 der zwei weiteren Gehäuseflächen 94, 96 versetzt angeordnet ist.

In Fig. 15 ist ein weiteres Ausführungsbeispiel eines erfindungsgemäßen Gehäuses 12 dargestellt, dessen wenigstens eine Gehäusefläche 18 konvex geformte Bereiche 20' bzw. nach außen gerichtete Rundungen oder Wölbungen aufweist. Die Kanten 112 des Gehäuses 12 nach Fig. 15 sind somit sämtlich abgerundet. Die Gehäusefläche 18 ist mit einer weiteren Gehäusefläche 114 mit einem ebenfalls konvex geformten Bereich 20 einerseits über Nut-Feder- oder dergleichen -Verbindungen 98 verbunden. Darüber hinaus dienen zwei seitliche, im wesentlichen starr ausgebildete Gehäuseflächen 94, 96 (in Fig. 15 ist aufgrund der Ansicht nur die Gehäusefläche 94 gezeigt), von welchen die beiden Gehäuseflächen 18, 114 mittels nicht dargestellten Nut-Feder-Verbindungen oder dergleichen Rast- bzw. Schnappverbindungen aufgenommen sind, der zusätzlichen Stabilisierung.

Wie der Fig. 15 entnehmbar ist, eignet sich der hier konvex geformte Bereich 20' der Gehäusefläche 18 gleichzeitig zur rastartigen Aufnehmung von einem oder mehreren Stützelementen 116, die neben einer Stabilisierung des konvex geformten Bereichs 20' zur Aufnahme von Platinen oder ähnlichem vorgesehen sein können. Die Platine 118 läßt sich beispielsweise an dem einen oder den mehreren Stützelementen 116 über eine Rast-, Schnapp- oder sonstigen Einsteckverbindung anbringen.

In Fig. 16 ist zur Erläuterung des Rückfederungswinkels α_{F} im konkav und/oder konvex geformten Bereich 20' der Gehäusefläche 18, welcher zumeist abkühlbedingt ist, eingezeichnet. Der Rückfederungswinkel α_{F} beträgt hier etwa 3°, um welche der vormals flächige Gegenstand 14 in der Schablone 52 - wie strichliniert - überbogen wird. Nach Abkühlung bzw. Verformung ist der flächige Gegenstand 14 bestrebt, um eben diesen Rückfederungswinkel α_{F} in seine ursprüngliche Ausgangslage zurückzukehren. Die Gehäusefläche 18 erhält somit die in den Fig. 15 und 16 dargestellte äußere Kontur in dem konkav und/oder konvex geformten Bereich 20'.

In Fig. 17 ist ein vormals flächiger Gegenstand 14 dargestellt, der zu einer Gehäusefläche 18 mit einem einzigen, großflächigen konvex geformten Bereich, d.h. einer nach außen gerichteten Rundung bzw. Wölbung geformt ist. Insoweit handelt es sich bei dem in Fig. 17 dargestellten Gegenstand quasi um ein Rohr oder hohlzylindrischen Körper, bei welchem die zwei einander zugewandten Stirnseiten 120 gegenseitig mittels einer Nut-Feder- oder dergleichen -Verbindung 98, insbesondere einrastend, verbindbar sind.

Im folgenden wird das zur Herstellung von Gehäusen 12 oder dergleichen aus im wesentlichen flächigen Gegenständen 14 aus insbesondere thermisch erweich- bzw. schmelzbarem Material wie Kunststoff beschrieben:
Der im wesentlichen flächige Gegenstand 14 wird zunächst zu einer im wesentlichen ebenflächigen Auflage 16 mittels einer nicht gezeigten Transporteinrichtung heranbefördert und auf der Auflage 16 positioniert. Zu diesem Zweck wird der Gegenstand 14 auf der Auflage 16 von einer, insbesondere mechanisch, elektrisch, pneumatisch oder hydraulisch bewegbaren, Positioniereinrichtung 24 (vgl. Fig. 1) in eine vorbestimmte Soll-Position gebracht und mittels Laserstrahlung positioniert, wobei die momentane Ist-Position des Gegenstands 14 über eine CO₂-Lasereinrichtung, HeNe-Lasereinrichtung oder dergleichen Lasereinrichtung 36 gemessen, einer Steuereinheit 28 zum Vergleich mit der vorbestimmten Soll-Position zugeführt und gegebenenfalls durch die Positioniereinrichtung 24 korrigiert wird.

Bei Übereinstimmung der Ist-Position des Gegenstands 14 mit der Soll-Position wird der Gegenstand 14 sodann gegebenenfalls auf die Auflage 16 von einer Andruckeinrichtung 40 (vgl. auch Fig. 1) angedrückt und somit lösbar festgelegt, und zwar bevorzugt seitlich geringfügig beabstandet zu dem konkav und/oder konvex zu formenden Bereich 20 des Gegenstands 14.

Entsprechend Fig. 18 wird der flächige Gegenstand 14 anschließend zur Bildung einer Gehäusefläche 18 mit einem konkav und/oder konvex geformten Bereich 20' bzw. einer nach innen und/oder nach außen gerichteten Rundung, Wölbung etc. durch Verminderung der Materialdicke 73 im wesentlichen im konkav und/oder konvex zu formenden Bereich 20 verformbar gemacht. Die Materialdicke 73 des flächigen Gegenstands 14 von der wenigstens einen Gehäusefläche 18 wird dabei im konkav und/oder konvex zu formenden Bereich 20 auf etwa zwischen 10 bis 40%, insbesondere auf ca. 25%, der Materialdicke 74 des flächigen Gegenstands 14 im übrigen Bereich 72, vorzugsweise mittels Fräsung, vermindert.

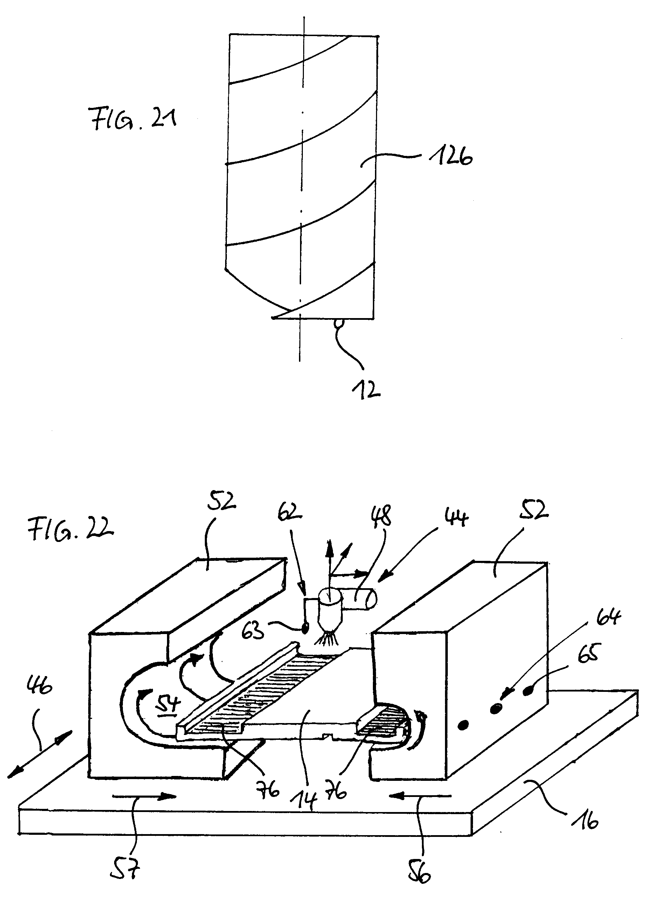

Nach der Verminderung der Materialdicke 73 wird der flächige Gegenstand 14 sodann gemäß Fig. 19 im konkav und/oder konvex zu formenden Bereich 20 und/oder im übrigen Bereich 72 mechanisch bearbeitet, beispielsweise mit einer gesägten Nut 122 oder Bohrung 124 etc. versehen. Eine mechanische Bearbeitung kann aber ohne weiteres vor der Verminderung der Materialdicke 73 im konkav und/oder konvex zu formenden Bereich 20 des Gegenstands 14 sowie zu einem noch späteren Zeitpunkt ausgeführt werden.

Nach Fig. 20 wird der wenigstens eine flächige Gegenstand 14 sodann im wesentlichen im konkav und/oder konvex zu formenden Bereich 20 durch Nuten 76 oder dergleichen Ausnehmungen verformbar gemacht, die in den flächigen Gegenstand 14 eingearbeitet werden. Die Einbringung der Nuten 76 oder dergleichen Ausnehmungen wird infolgedessen nach Verminderung der Materialdicke 73 im konkav und/oder konvex geformten Bereich 20 zusätzlich vorgenommen. Ebenso ist es jedoch möglich, den Verfahrensschritt nach der Fig. 18 auszulassen, so daß die Einbringung der Nuten 76 oder dergleichen Ausnehmungen gleichzeitig der eigentlichen Verminderung der Materialdicke 73 in dem konkav und/oder konvex zu formenden Bereich 20 des Gegenstands 14 dient. Die Nuten 76 oder dergleichen Ausnehmungen werden dabei etwa parallel zueinander und etwa senkrecht zur sich entsprechend Doppelpfeil 46 erstreckenden Erzeugenden des konkav und/oder konvex zu formenden Bereichs 20, d.h. in Richtung der Pfeile 56, 57, verlaufend in den flächigen Gegenstand 14 eingefräst.

Insbesondere werden die Nuten 76 oder dergleichen Ausnehmungen im wesentlichen durchgehend oder alternativ unterbrochen ausgebildet. Gegebenenfalls wird wenigstens ein Teil der Nuten 76 oder dergleichen Ausnehmungen von Stegen 80 oder dergleichen unterbrochen, die etwa in Richtung der Erzeugenden nach Doppelpfeil 46 des konkav und/oder konvex zu formenden Bereichs 20 verlaufen. Vorzugsweise werden die Nuten 76 oder dergleichen Ausnehmungen dabei an derjenigen Seite des wenigstens einen flächigen Gegenstands 14 im konkav und/oder konvex zu formenden Bereich 20 vorgesehen, welche der Innenseite 104 der Gehäusefläche 18 entspricht.

Von besonderem Vorteil für eine ausreichende Biegbarkeit und zugleich hohe Formstabilität haben sich Nuten 76 oder dergleichen Ausnehmungen erwiesen, die mit einer Tiefe von etwa 0,05 mm bis circa 0,5 mm, insbesondere von 0,3 mm, in den flächigen Gegenstand 14 eingebracht sind.

Die Nuten 76 oder dergleichen Ausnehmungen werden vorzugsweise durch Fräsung des flächigen Gegenstands 14 im wesentlichen im konkav und/oder konvex zu formenden Bereich 20 der wenigstens einen Gehäusefläche 18 eingearbeitet. Von besonderem Vorteil ist in diesem Zusammenhang, wenn die Nuten 76 oder dergleichen Ausnehmungen mit einem Fräser gebildet werden, der etwa mäanderförmig durch den konkav und/oder konvex zu formenden Bereich 20 geführt wird, wobei die Vorschubgeschwindigkeit des Fräsers jeweils in der einen Richtung etwa senkrecht zur Erzeugenden, beispielsweise gemäß Pfeil 56, geringer ist, als die Vorschubgeschwindigkeit des Fräsers jeweils in der anderen entgegengesetzten Richtung etwa senkrecht zur Erzeugenden, beispielsweise gemäß Pfeil 57, wie in Fig. 20 angedeutet.

Als zweckmäßig hat es sich dabei erwiesen, die Nuten 76 oder dergleichen Ausnehmungen mit einem Schaftfräser 126, Scheibenfräser oder dergleichen zu bilden. In Fig. 21 ist ein bevorzugter Schaftfräser 126 dargestellt, dessen Stirnseite 128 lediglich geringfügig über dessen Mittellängsachse hinausragt. Vorzugsweise werden die Nuten 76 oder dergleichen Ausnehmungen endseitig etwa in Richtung der Erzeugenden gemäß Doppelpfeil 46 des konkav und/oder konvex zu formenden Bereichs 20 des Gegenstands 14 verlaufend durch Nuten 88 begradigt.

Nach Fig. 22 wird der wenigstens eine flächige Gegenstand 14 anschließend gegebenenfalls im wesentlichen im konkav und/oder konvex zu formenden Bereich 20 insbesondere flächig durch Heißluft, die von der sich quer zur Auflage 16 gemäß Doppelpfeil 46 hin- und herbewegenden Heizeinrichtung 44 erwärmt. Während der Erwärmung bzw. Erweichung und Schmelzung des flächigen Gegenstands 14 in dem konkav und/oder konvex zu formenden Bereichs 20 durch die Heizeinrichtung 44 wird ständig die Temperatur mittels einer Temperaturmeßeinrichtung 62 und insbesondere Temperatursensoren 63 gemessen. Auf diese Weise soll die erforderliche Temperatur genau eingestellt und damit zusammenhängend auch das Material des Gegenstands 14 gegen Überhitzung geschützt werden.

Gleichzeitig wird die Widerstandskraft in dem konkav und/oder konvex zu formenden Bereich 20 des Gegenstands 14, der gegebenenfalls durch die Heizeinrichtung 44 erweicht bzw. geschmolzen wird, durch Drucksensoren 65 oder dergleichen Druckmeßeinrichtung 64 gemessen, die an der Schablone 52 angeordnet sind. Die momentane Ist-Widerstandskraft wird der Steuereinheit 28 zum Vergleich mit einer vorbestimmten Soll-Widerstandskraft zugeführt.

Bei Übereinstimmung der Ist-Widerstandskraft mit der Soll-Widerstandskraft werden bei der Ausführung der Vorrichtung nach Fig. 23 bzw. auch Fig. 2 alsdann zwei Schablonen 52 mit einem konkav geformten Bereich 54 von einer diesen jeweils zugeordneten, mit der Steuereinheit 28 verbundenen Antriebseinrichtung 58 etwa senkrecht zur Erzeugenden des konkav und/oder konvex zu formenden Bereichs 20 entsprechend Pfeil 57 (vgl. linke Schablone 52) bzw. entsprechend Pfeil 56 (vgl. rechte Schablone 52) gegeneinander bewegt. Die Schablonen 52 bewegen sich somit entsprechend der Pfeile 56, 57 über die jeweilige Antriebseinrichtung 58 (hier nicht dargestellt) hin in den Zentralbereich der Auflage 16. Der flächige Gegenstand 14 rollt daher quasi in den konkaven Bereichen 54 der Schablonen 52 ab. Zum Ausgleich eines abkühlbedingten Rückfederungswinkels α_{F} wird der konkav und/oder konvex zu formende Bereich 20 des flächigen Gegenstands 14 in der Schablonen 52 dabei gegebenenfalls überbogen, und zwar vorzugsweise um einen Winkel von etwa 3°.

Bei der Vorrichtung nach Fig. 1 würde demgegenüber lediglich die Schablone 52 entsprechend Pfeil 56 gegen die Andruckrichtung 40 und/oder die vorgesehene Anschlagleiste 68, die den flächigen Gegenstand 14 positionsgenau halten, durch die Antriebseinrichtung 58 verschoben werden.

Nach Fig. 24 wird der flächige Gegenstand 14 hieraufhin in der Schablone 52 mit dem konkav geformten Bereich 54 zur Erzeugung des konkav und/oder konvex zu formenden Bereichs 20 der Gehäusefläche 18 gehalten.

Der in der Schablone 52 gehaltene flächige Gegenstand 14, d.h. die nunmehrige Gehäusefläche 18, wird gleichzeitig, sofern der konkav und/oder konvex zu formende Bereich 20 des Gegenstands 14 zuvor erwärmt wurde, in der Schablone 52 selbst über eine Abkühleinrichtung 66, wie einem Gebläse 67 oder dergleichen, im wesentlichen im konkav und/oder konvex geformten Bereich 20' durch Umluft, Preßluft abgekühlt. Die Abkühleinrichtung 66 bewegt sich zu diesem Zweck quer zur Auflage 16 entsprechend Doppelpfeil 46.

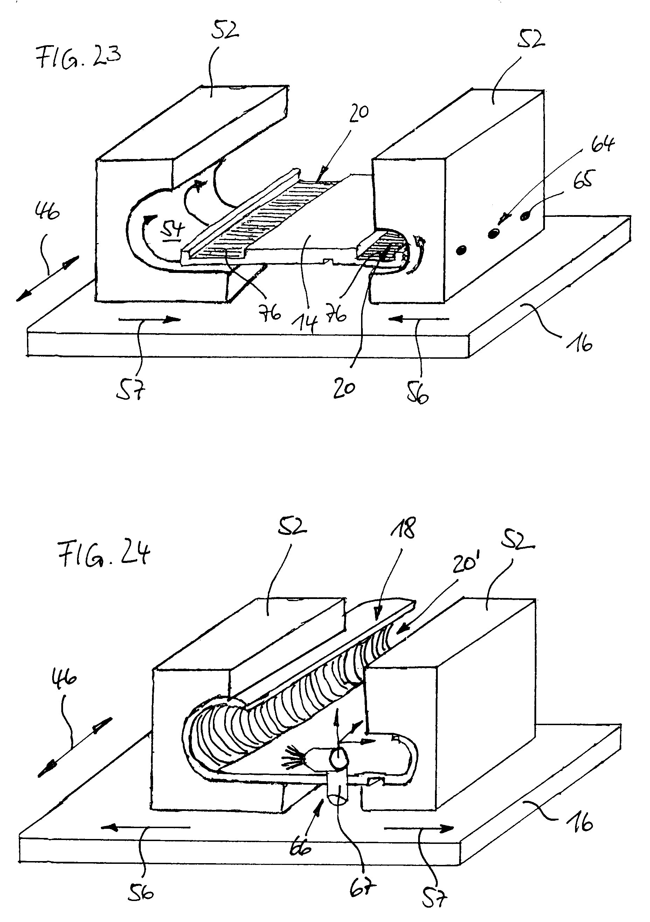

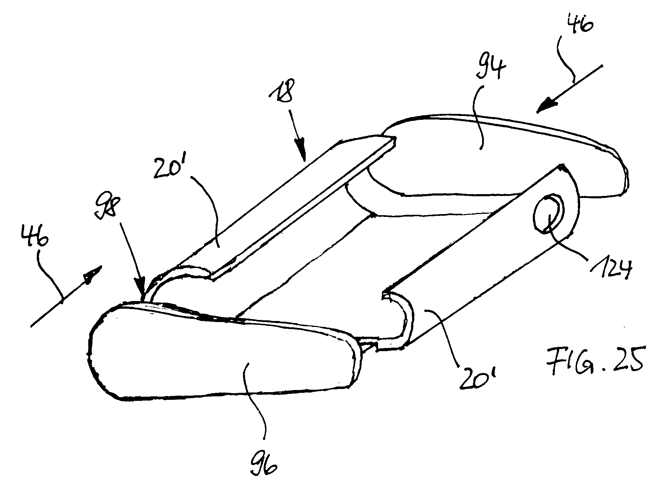

Im Anschluß daran wird die in ihre vorbestimmte Form verbrachte Gehäusefläche 18 gemäß Fig. 25 mit mindestens zwei weiteren im wesentlichen starr ausgebildeten, die in ihre vorbestimmte Form verbrachte Gehäusefläche 18 aufnehmenden Gehäuseflächen 94, 96 verbunden, und zwar mittels einer Nut-Feder- oder dergleichen -Verbindung 98, insbesondere einer Rast- bzw. Schnappverbindung. Die Nut-Feder- oder dergleichen -Verbindung kann dabei beliebig ausgestaltet sein. Auf diese Weise erhält man durch das erfindungsgemäße Verfahren ein Gehäuse, kubischen Körper oder dergleichen. Die zwei weiteren Gehäuseflächen 94, 96 werden zum Beispiel über Transportvorrichtungen 69 (hier nicht gezeigt) seitlich in Richtung der Erzeugenden der beiden konkav und/oder konvex geformten Bereiche 20' der Gehäusefläche 18 entsprechend Doppelpfeil 46 bis zur erfolgten Einrastung maschinell herangeführt.

Ebenso lassen sich mit dem erfindungsgemäßen Verfahren Rohre oder sonstige hohlzylindrische bzw. hohlartige Körper herstellen, indem nämlich jeweils zwei einander zugewandte Stirnseiten 120 des in die vorbestimmte Form verbrachten Gegenstands 14 mittels einer Nut-Feder- oder dergleichen -Verbindung 98, insbesondere einrastend, gegenseitig oder mit Stirnseiten eines weiteren in die vorbestimmte Form verbrachten Gegenstands (nicht dargestellt) verbunden werden.

Die beiden Schablonen 52 mit dem konkav geformten Bereich 54 werden daraufhin etwa senkrecht zur Erzeugenden des konkav und/oder konvex zu formenden Bereichs 20 entsprechend Pfeil 56 (vgl. linke Schablone 52) bzw. entsprechend Pfeil 57 (vgl. rechte Schablone 52) auseinander bewegt, und zwar abermals durch die mit der Steuereinheit 28 verbundenen Antriebseinrichtung 58.

Der verformte Gegenstand 14 bzw. die Gehäusefläche 18 mit dem konkav und/oder konvex geformten Bereich wird schließlich über eine nicht dargestellte Transporteinrichtung zu einer nächsten Bearbeitungsstation weiter befördert.

Sämtliche in den Anmeldungsunterlagen offenbarten Merkmale werden als erfindungswesentlich beansprucht, soweit sie einzeln oder in Kombination gegenüber dem Stand der Technik neu sind.

## Patentansprüche

1. Verfahren zur Herstellung von Gehäusen (12) oder dergleichen aus im wesentlichen flächigen Gegenständen (14) aus Kunststoff oder dergleichen, insbesondere thermisch erweich- bzw. schmelzbarem Material,
dadurch gekennzeichnet,
daß wenigstens einer der flächigen Gegenstände (14) zur Bildung einer Gehäusefläche (18) mit einem konkav und/oder konvex geformten Bereich (20') durch Verminderung der Materialdicke im wesentlichen im konkav und/oder konvex zu formenden Bereich (20) verformbar gemacht und in die für die Gehäusefläche (18) vorbestimmte Form formstabil verbracht wird.

2. Verfahren nach Anspruch 1, dadurch gekennzeichnet, daß der wenigstens eine flächige Gegenstand (14) im wesentlichen im konkav und/oder konvex zu formenden Bereich (20) durch Nuten (76) oder dergleichen Ausnehmungen verformbar gemacht wird, die in den flächigen Gegenstand (14) eingearbeitet werden.

3. Verfahren nach Anspruch 2, dadurch gekennzeichnet, daß die Nuten (76) oder dergleichen Ausnehmungen etwa parallel zueinander und etwa senkrecht zur Erzeugenden des konkav und/oder konvex zu formenden Bereichs (20) verlaufend in den flächigen Gegenstand (14) eingearbeitet werden.

4. Verfahren nach Anspruch 2 und/oder 3, dadurch gekennzeichnet, daß die Nuten (76) oder dergleichen Ausnehmungen mit einem Fräser gebildet werden, der etwa mäanderförmig durch den konkav und/oder konvex zu formenden Bereich (20) geführt wird, wobei die Vorschubgeschwindigkeit des Fräsers in der einen Richtung etwa senkrecht zur Erzeugenden geringer ist als die Vorschubgeschwindigkeit des Fräsers in der anderen entgegengesetzten Richtung etwa senkrecht zur Erzeugenden.

5. Verfahren nach einem der Ansprüche 1 bis 4, dadurch gekennzeichnet, daß der wenigstens eine flächige Gegenstand (14) in eine Schablone (52) mit einem konkav oder dergleichen geformten Bereich (54) zur Erzeugung des konkav und/oder konvex zu formenden, biegsamen Bereichs (20) der Gehäusefläche (18) eingebracht und in der Schablone (52) in ihrer vorbestimmten Form gehalten wird.

6. Verfahren nach wenigstens einem der Ansprüche 1 bis 5, dadurch gekennzeichnet, daß der wenigstens eine flächige Gegenstand (14) im wesentlichen im konkav und/oder konvex zu formenden Bereich (20), insbesondere flächig, vorzugsweise durch Heißluft, erwärmt wird.

7. Verfahren nach Anspruch 6, dadurch gekennzeichnet, daß der konkav und/oder konvex zu formende Bereich (20) des flächigen Gegenstands (14) in der Schablone (52) um einen abkühlbedingten Rückfederungswinkel α_{F}, insbesondere von etwa 3°, überbogen wird.

8. Verfahren nach wenigstens einem der Ansprüche 1 bis 7, dadurch gekennzeichnet, daß die in ihre vorbestimmte Form verbrachte Gehäusefläche (18) mit mindestens zwei weiteren im wesentlichen starr ausgebildeten, die in ihre vorbestimmte Form verbrachte Gehäusefläche (18) aufnehmenden Gehäuseflächen (94, 96), vorzugsweise mittels einer Nut-Feder- oder dergleichen -Verbindung (98), insbesondere einrastend, verbunden wird.

9. Vorrichtung zur Herstellung von Gehäusen (12) oder dergleichen aus im wesentlichen flächigen Gegenständen (14) aus Kunststoff oder dergleichen, insbesondere thermisch erweich- bzw. schmelzbarem, Material, vorzugsweise zur Durchführung des Verfahrens nach den Ansprüchen 1 bis 8, gekennzeichnet durch
eine im wesentlichen ebenflächige Auflage (16) zur Abstützung wenigstens eines der zu mindestens einer Gehäusefläche (18) mit einem konkav und/oder konvex geformten Bereich (20) zu bildenden flächigen Gegenstands (14),
wenigstens eine Schablone (52) mit einem konkav geformten Bereich (54), die auf der ebenflächigen Auflage (16) etwa senkrecht zur Erzeugenden des konkav und/oder konvex zu formenden Bereichs (20) des flächigen Gegenstands (14) verlaufend verschiebbar angeordnet ist, wobei der konkav und/oder konvex zu formende Bereich (20) des flächigen Gegenstands (14) verformbar ist,
zwei Transportvorrichtungen (69) zum Halten, Verbringen und Verbinden von zwei weiteren im wesentlichen starr ausgebildeten, seitlichen und die von der Schablone (52) in ihrer vorbestimmten Form gehaltene Gehäusefläche (18) aufnehmenden Gehäuseflächen (94, 96), die auf der auf der ebenflächigen Auflage (16) etwa in Richtung der Erzeugenden des konkav und/oder konvex zu formenden Bereichs (20) des flächigen Gegenstands (14) verlaufend verschiebbar angeordnet sind, sowie
eine Steuereinheit (28) zur Steuerung der wenigstens einen Schablone (52) und der beiden Transportvorrichtungen (69).

10. Vorrichtung nach Anspruch 9, dadurch gekennzeichnet, daß die Transportvorrichtungen (69) mittels einer Antriebseinrichtung (70) auf der ebenflächigen Auflage (16) etwa in Richtung der Erzeugenden des konkav und/oder konvex zu formenden Bereichs (20) des flächigen Gegenstands (14) verlaufend verschiebbar sind, wobei insbesondere die Antriebseinrichtung (70) zur Verschiebung der Transportvorrichtungen (69) mit der Steuereinheit (28) verbunden und von der Steuereinheit (28) betätigbar ist.

11. Vorrichtung zur Herstellung von Gehäusen (12) oder dergleichen aus im wesentlichen flächigen Gegenständen (14) aus Kunststoff oder dergleichen, insbesondere thermisch erweich- bzw. schmelzbarem, Material, vorzugsweise zur Durchführung des Verfahrens nach den Ansprüchen 1 bis 8,
gekennzeichnet durch
eine im wesentlichen ebenflächige Auflage (16) zur Abstützung wenigstens eines der zu mindestens einer Gehäusefläche (18) mit einem konkav und/oder konvex geformten Bereich (20) zu bildenden flächigen Gegenstands (14),
eine Heizeinrichtung (44) zur Erweichung bzw. Schmelzung eines konkav und/oder konvex zu formenden Bereichs (20) des flächigen Gegenstands (14), die im wesentlichen in Richtung der Erzeugenden des konkav und/oder konvex zu formenden Bereichs (20) bewegbar ist,
wenigstens eine Schablone (52) mit einem konkav geformten Bereich (54), die auf der ebenflächigen Auflage (16) etwa senkrecht zur Erzeugenden des konkav und/oder konvex zu formenden Bereichs (20) des flächigen Gegenstands (14) verlaufend verschiebbar angeordnet ist, sowie
eine Steuereinheit (28) zur Steuerung der Heizeinrichtung (44) und der wenigstens einen Schablone (52).

12. Vorrichtung nach wenigstens einem der Ansprüche 9 bis 11, dadurch gekennzeichnet, daß der Auflage (16) eine, insbesondere mechanisch, elektrisch, pneumatisch oder hydraulisch betätigbare, Positioniereinrichtung (24) zum Verbringen des Gegenstands (14) in eine vorbestimmte Soll-Position zugeordnet ist.

13. Vorrichtung nach einem der Ansprüche 9 bis 12, dadurch gekennzeichnet, daß mindestens eine Andruckeinrichtung (40) zur lösbaren Befestigung des Gegenstands (14) auf der Auflage (16) oberhalb der Auflage (16) vertikal bewegbar angeordnet ist.

14. Vorrichtung nach einem der Ansprüche 11 bis 13, dadurch gekennzeichnet, daß die Heizeinrichtung (44) zur Erweichung bzw. Schmelzung des konkav und/oder konvex zu formenden Bereichs (20) des Gegenstands (14) wenigstens ein Heißluftgebläse (48) oder dergleichen umfaßt, das oberhalb der Auflage (16), vorzugsweise an der Andruckeinrichtung (40), insbesondere an einer Schiene, entlang dieser verfahrbar, angeordnet ist.

15. Vorrichtung nach wenigstens einem der Ansprüche 9 bis 14, dadurch gekennzeichnet, daß die Schablone (52) mittels einer Antriebseinrichtung (58) auf der ebenflächigen Auflage (16) etwa senkrecht zur Erzeugenden des konkav und/oder konvex zu formenden Bereichs (20) des flächigen Gegenstands (14) verlaufend verschiebbar ist.

16. Vorrichtung nach einem der Ansprüche 11 bis 15, dadurch gekennzeichnet, daß die Schablone (52) im konkav geformten Bereich (54) mit einer Überbiegung zum Ausgleich eines abkühlbedingten Rückfederungswinkels α_{F}, insbesondere von etwa 3°, im konkav und/oder konvex geformten Bereich (20) des Gegenstands (14) versehen ist.

17. Vorrichtung nach einem der Ansprüche 11 bis 16, dadurch gekennzeichnet, daß der wenigstens einen Schablone (52) eine Druckmeßeinrichtung (64) zum Messen der Widerstandskraft in dem zu erweichenden bzw. zu schmelzenden Bereich (20) des Gegenstands (14) zugeordnet ist.

18. Gehäuse oder dergleichen aus im wesentlichen flächigen Gegenständen (14) aus Kunststoff oder dergleichen, insbesondere thermisch erweich- bzw. schmelzbarem, Material, vorzugsweise durch das Verfahren gemäß den Ansprüchen 1 bis 8 und die Vorrichtung nach den Ansprüchen 9 bis 17 hergestellt,
dadurch gekennzeichnet,
daß wenigstens einer der flächigen Gegenstände (14) eine Gehäusefläche (18) mit einem konkav und/oder konvex geformten Bereich (20') bildet, wobei der flächige Gegenstand (14) im wesentlichen im konkav und/oder konvex geformten Bereich (20') der Gehäusefläche (18) eine geringere Materialdicke als im übrigen Bereich (72) aufweist.

19. Gehäuse nach Anspruch 18, dadurch gekennzeichnet, daß die Materialdicke (73) des flächigen Gegenstands (14) von der wenigstens einen Gehäusefläche (18) im konkav und/oder konvex geformten Bereich (20') etwa zwischen 10 und 40%, insbesondere ca. 25%, der Materialdicke (74) des flächigen Gegenstands (14) im übrigen Bereich (72) beträgt.

20. Gehäuse nach Anspruch 18 und/oder 19, dadurch gekennzeichnet, daß die wenigstens eine Gehäusefläche (18) im wesentlichen im konkav und/oder konvex geformten Bereich (20') mit Nuten (76) oder dergleichen Ausnehmungen versehen ist.

21. Gehäuse nach Anspruch 20, dadurch gekennzeichnet, daß die Nuten (76) oder dergleichen Ausnehmungen etwa parallel zueinander und etwa senkrecht zur Erzeugenden des konkav und/oder konvex geformten Bereichs (20') der Gehäusefläche (18) verlaufen.

22. Gehäuse nach Anspruch 20 und/oder 21, dadurch gekennzeichnet, daß die Nuten (76) oder dergleichen Ausnehmungen im wesentlichen durchgehend und/oder unterbrochen ausgebildet sind und/oder wenigstens ein Teil der Nuten (76) oder dergleichen Ausnehmungen von etwa in Richtung der Erzeugenden des konkav und/oder konvex geformten Bereichs (20) verlaufenden Stegen (80) oder dergleichen unterbrochen ist.

23. Gehäuse nach wenigstens einem der Ansprüche 20 bis 22, dadurch gekennzeichnet, daß die Nuten (76) oder dergleichen Ausnehmungen an der Innenseite (104) der wenigstens einen Gehäusefläche (18) im konkav und/oder konvex geformten Bereich (20) vorgesehen sind.

24. Gehäuse nach wenigstens einem der Ansprüche 20 bis 23, dadurch gekennzeichnet, daß die Nuten (76) oder dergleichen Ausnehmungen endseitig etwa in Richtung der Erzeugenden des konkav und/oder konvex zu formenden Bereichs (20) verlaufend begradigt sind.

25. Gehäuse nach wenigstens einem der Ansprüche 18 bis 24, dadurch gekennzeichnet, daß die in ihre vorbestimmte Form verbrachte Gehäusefläche (18) mit mindestens zwei weiteren Gehäuseflächen (94, 96), die im wesentlichen starr ausgebildet sind, mittels eine Nut-Feder- oder dergleichen -Verbindung (98), insbesondere einrastend, verbindbar ist.

## Claims

1. A process for producing housings (12) or the like from essentially flat objects (14) of plastics or the like, particularly thermally softenable or meltable material, respectively, characterised in that, at least one of the flat objects (14) is made deformable by reducing the material thickness essentially in a section (20) to be shaped concave and/or convex for forming a housing surface (18) having a concave and/or convex shaped section (20') and dimensionally stable is brought into a predetermined form of the housing surface (18).

2. Process according to claim 1, characterised in that the at least one flat object (14) is made deformable essentially in the section (20) to be shaped concave and/or convex by grooves (76) or the like recesses worked into the flat object (14).

3. Process according to claim 2, characterised in that the grooves (76) or the like recesses are worked into the flat object (14) approximately in parallel to each other and approximately perpendicular to the generatrix of the section (20) to be shaped concave and/or convex.

4. Process according to claim 2 and/or 3, characterised in that the grooves (76) or the like recesses are formed with a hob cutter that is passed approximately in the form of a meander through the section (20) to be shaped concave and/or convex, wherein the chart speed of the hob cutter in the one direction approximately perpendicular to the generatrix is lower than the chart speed of the hob cutter in the other opposite direction approximately perpendicular to the generatrix.

5. Process according to one of claims 1 to 4, characterised in that the at least one flat object (14) is placed into a template (52) having a concave or the like shaped section (54) for producing the flexible section (20) of the housing surface (18) to be shaped concave and/or convex and is maintained within the template (52) in its predetermined form.

6. Process according to at least one of claims 1 to 5, characterised in that the at least one flat object (14) is heated in the section (20) to be shaped concave and/or convex in particular flat and preferable by means of hot air.

7. Process according to claim 6, characterised in that the section (20) to be shaped concave and/or convex of the flat object (18) is bent in excess in the template (52) by an angle of resilience α_{F}, particularly of about 3°.

8. Process according to at least one of claims 1 to 7, characterised in that the housing surface (18) brought into its predetermined form is connected with at least two further essentially rigid formed housing surfaces (94, 96), receiving the housing surface (18) brought into its predetermined form, preferably by means of a groove and tongue or the like connection (98), particularly by a snap-in mechanism.

9. A device for producing housings (12) or the like from essentially flat objects (14) of plastics or the like, particularly thermally softenable or meltable material, respectively, preferably to conduct the process according to claims 1 to 8, characterised by an essentially flat support (16) to support at least one flat object (14) to be formed from at least one housing surface (18) having a concave or convex shaped section (20),
at least one template (52) having a concave shaped section (54) displaceably arranged on the flat support (16) approximately perpendicular to the generatrix of the section (20) of the flat object (14) to be shaped concave and/or convex, wherein the section (20) to be shaped concave and/or convex of the object (14) is deformable,
to transporting devices (69) for holding, displacing and connecting two further essentially rigidly formed lateral housing surfaces (94, 96) receiving the housing surface (18) hold by the template (52) in its predetermined form, which are slidingly arranged on the flat support approximately in direction of the generatrix of the section (20) to be shaped concave and/or convex of the flat object (14) as well as a control unit (28) for controlling the at least one template (52) and both the transporting devices (69).

10. Device according to claim 9, characterised in that the transporting devices 69 are movable by means of a driving means (70) on the flat support (16) approximately in direction of the generatrix of section 20 of the flat object 14 to be shaped concave and/or convex, wherein particularly the driving means (70) is connected with the control unit (28) for moving the transporting devices (69) and operable with the control unit.

11. Device for producing housings (12) or the like from essentially flat objects (14) of plastics or the like, particularly thermally softenable or meltable material, respectively preferably to conduct the process of claims 1 to 8, characterised by an essentially flat support (16) to support at least one flat object (14) to be formed from at least one housing surface (18) having a concave and/or convex shaped section (20),
a heating unit (44) for softening or melting, respectively a section (20) of the flat object (14) to be shaped concave and/or convex, which essentially is movable in direction to the generatrix of the section (20) to be shaped concave and/or convex,
at least one template (52) having a concave shaped section (54) that is movably arranged on the flat support (16) approximately perpendicular to the generatrix of the section (20) of the flat object (14) to be shaped concave and/or convex as well as a control unit (28) for controlling the heating device (44) and the at least one template (52).

12. Device according to at least one of claims 9 to 11, characterised in that the support (16) is associated with a positioning device (24) for moving the object (14) into a predetermined desired position which is mechanical, electrical, pneumatical or hydraulical operable.

13. Device according to one of claims 9 to 12, characterised in that at least one pressing device (40) is arranged vertically movable above the support (16) for detachably mounting the object (14) on the support (16).

14. Device according to one of claims 11 to 13, characterised in that the heating device (44) for softening or melting, respectively the section (20) of the object (14) to be shaped concave and/or convex comprises at least one hot-air blower (48) or the like that is arranged above the support (16), preferably on the pressing device (40), particularly movable on a rail.

15. Device according to at least one of claims 9 to 14, characterised in that the template (52) is displaceable on the flat support (16) approximately perpendicular to the generatrix of the section (20) to be shaped concave and/or convex of the flat object (14) by means of a driving device (58).

16. Device according to one of claims 11 to 15, characterised in that the template (52) is bent in excess within the concave shaped portion (54) in order to compensate an angle of resilience α_{F} due to cooling, particularly of about 3°, in the concave and/or convex shaped section (20) of the object (14).

17. Device according to one of claims 11 to 16, characterised in that the at least one template (52) is associated with a pressure measuring device (64) for measuring the resisting force in the section (20) of the object (14) to be softened or melted, respectively.

18. Housing or the like of essentially flat objects (14) of plastics or the like, particularly thermally softenable or meltable material respectively, preferably produced by the process according to claim 1 to 8 and the device according to the claims 9 to 17, characterised in that at least one of the flat objects (14) is forming a housing surface (18) having a concave and/or convex shaped portion (20'), whereby the flat object (14) has a smaller material thickness essentially in the concave and/or convex shaped section (20') of the housing surface (18) than in the other sections (72).

19. Housing according to claim 18, characterised in that the material thickness (73) of the flat object (14) of the at least one housing surface (18) in the concave and/or convex shaped section (20') is about 10 to 40 %, particularly about 25 %, of the material thickness (74) of the flat object (14) in the other sections (72).

20. Housing according to claim 18 and/or 19, characterised in that the at least one housing surface (18) in the essentially concave and/or convex shaped section (20') is provided with grooves (76) or the like recesses.

21. Housing according to claim 20, characterised in that the grooves (76) or the like recesses extend approximately parallel to each other and approximately perpendicular to the generatrix of the concave and/or convex shaped portion (20') of the housing surface (18).

22. Housing according to claim 20 and/or 21, characterised in that the grooves (76) or the like recesses are formed essentially continuous and/or broken and/or at least a part of the grooves (76) or the like recesses are interrupted by bars (80) or the like extending approximately in direction of the generatrix of the concave and/or convex shaped section (20).

23. Housing according to at least one of claims 20 to 22, characterised in that the grooves (76) or the like recesses are provided at the inner side (104) of the at least one housing surface (18) in a concave and/or convex shaped portion.

24. Housing according to at least one of claims 20 to 23, characterised in that the grooves (76) or the like recesses are straightened at their extremities approximately in direction of the generatrix of the section (20) to be shaped concave and/or convex.

25. Housing according to at least one of claims 18 to 24, characterised in that the housing surface (18) brought into its predetermined form is connectable with at least two further housing surfaces (94, 96) essentially rigid formed by means of a groove toung- or the like connection (98).

## Revendications

1. Procédé pour fabriquer des boîtiers (12) ou des objets similaires (14) essentiellement plats, en matière plastique ou analogue, notamment en un matériau pouvant être ramolli ou fusible thermiquement,
caractérisé en ce
qu'on rend déformable au moins l'un des objets plats (14), pour la formation d'une surface (18) du boîtier possédant une partie (20') agencée avec une forme concave et/ou convexe, par réduction de l'épaisseur de matériau essentiellement dans la partie (20) devant être réalisée avec une forme concave et/ou convexe, et qu'on l'amène dans une configuration stable sous la forme prédéterminée pour la surface (18) du boîtier.

2. Procédé selon la revendication 1, caractérisé en ce qu'on rend déformable le au moins un objet plat (14) essentiellement dans la partie (20) devant être réalisée avec une forme concave et/ou convexe, par des rainures (76) ou des évidements analogues, qui sont formés par usinage dans l'objet plat (14).

3. Procédé selon la revendication 2, caractérisé en ce qu'on forme par usinage, dans l'objet plat (14), les rainures (76) ou évidements analogues de manière à s'étendre approximativement parallèlement entre eux et approximativement perpendiculairement aux génératrices de la partie (20) devant être réalisée avec une forme concave et/ou convexe.

4. Procédé selon la revendication 2 et/ou 3, caractérisé en ce qu'on forme les rainures (76) ou les évidements analogues au moyen d'une fraiseuse, qui est guidée selon un trajet approximativement sinueux dans la zone (20) devant être réalisée avec une forme concave et/ou convexe, la vitesse d'avance de la fraiseuse dans une direction approximativement perpendiculaire à la génératrice étant inférieure à la vitesse d'avance de la fraiseuse dans l'autre direction opposée approximativement perpendiculaire à ladite génératrice.

5. Procédé selon l'une des revendications 1 à 4, caractérisé en ce qu'on place le au moins un objet plat (14) dans un gabarit (52) comportant une partie (54) réalisée avec une forme concave ou analogue, pour produire la partie flexible (20) de la surface (18) du boîtier, qui doit être réalisée avec une forme concave et/ou convexe, et qu'on maintient cet objet dans le gabarit (52) dans sa forme prédéterminée.

6. Procédé selon au moins l'une des revendications 1 à 5, caractérisé en ce qu'on chauffe le au moins un objet plat (14) essentiellement dans la partie (20) devant être réalisée avec une forme concave et/ou convexe, et notamment plate, de préférence à l'aide d'air chaud.

7. Procédé selon la revendication 6, caractérisé en ce qu'on recourbe la partie (20), qui doit être réalisée avec une forme concave et/ou convexe, de l'objet plat (14) dans le gabarit (52) est cintrée en excès sur un angle de rappel élastique (α_{F}), notamment d'environ 3°, conditionné par le refroidissement.

8. Procédé selon au moins l'une des revendications 1 à 7, caractérisé en ce qu'on relie la surface (18) du boîtier, qui est mise sous sa forme prédéterminée, à au moins deux autres surfaces (94,96) du boîtier, qui sont agencées de manière à être essentiellement rigides et qui reçoivent la surface (18) du boîtier, placée sous sa forme prédéterminée, et ce de préférence au moyen d'une liaison du type à rainure et languette ou analogue (98), notamment à encliquetage.

9. Dispositif pour fabriquer des boîtiers (12) ou des objets similaires (14) essentiellement plats, en matière plastique ou analogue, notamment en un matériau pouvant être ramolli ou fusible thermiquement, de préférence pour la mise en oeuvre du procédé selon les revendications 1 à 8, caractérisé par
un support essentiellement plat (16) pour supporter au moins un objet plat (14), dont au moins une surface (18) doit être réalisée avec une zone (20) réalisée avec une forme concave et/ou convexe,
au moins un gabarit (52) possédant une partie (54) déformée avec une forme concave et qui est disposée sur le support plat (16) de manière à être déplacable approximativement perpendiculairement à la génératrice de la partie (20), devant être réalisée avec une forme concave et/ou convexe, de l'objet plat (14), la partie (20), devant être réalisée avec une forme concave et/ou convexe, de l'objet plat (14) étant déformable,
deux dispositifs de transport (69) pour retenir, déplacer et relier deux autres surfaces latérales (94,96) du boîtier, qui sont réalisées de manière à être essentiellement rigides et reçoivent la surface (18) du boîtier qui est maintenu par le gabarit (52) dans sa forme prédéterminée, et qui sont disposées de manière à être déplaçables sur le support plat (16) approximativement dans la direction de la génératrice de la partie (20), devant être réalisée avec une forme concave et/ou convexe, de l'objet plat (14), ainsi
qu'une unité de commande (28) servant à commander le au moins un gabarit (52) et les deux dispositifs de transport (69).

10. Dispositif selon la revendication 9, caractérisé en ce que les dispositifs de transport (69) peuvent être déplacés au moyen d'un dispositif d'entraînement (70) sur le support plat (16) approximativement dans la direction de l'enveloppe de la partie (20), qui doit être réalisée avec une forme concave et/ou convexe, de l'objet plat (14), auquel cas notamment le dispositif d'entraînement (70) pour le déplacement du dispositif de transport (69) est relié à l'unité de commande (28) et peut être actionné par l'unité de commande (28).

11. Dispositif pour fabriquer des boîtiers (12) ou des objets similaires essentiellement plats, en matière plastique ou analogue, notamment en un matériau pouvant être ramolli ou fusible thermiquement, de préférence pour la mise en oeuvre du procédé selon les revendications 1 à 8, caractérisé par
un support essentiellement plat (16) pour supporter au moins un objet plat (14), dont au moins une surface (18) doit être réalisée avec une zone (20) réalisée avec une forme concave et/ou convexe,
un dispositif de chauffage (44) pour ramollir ou faire fondre une partie (20) devant être réalisée avec une forme concave et/ou convexe, de l'objet plat (14), qui est déplaçable essentiellement dans la direction de la génératrice de la partie (20) devant être réalisée avec une forme concave et/ou convexe,
au moins un gabarit (52) comportant une partie de forme concave (54), qui est disposée sur le support plat (16) de manière à être déplaçable approximativement perpendiculairement à la génératrice de la partie (20), devant être réalisée avec une forme concave et/ou convexe, de l'objet plat (14), ainsi
qu'une unité de commande (28) pour commander le dispositif de chauffage (44) et le au moins un gabarit (52).

12. Dispositif selon au moins l'une des revendications 9 à 11, caractérisé en ce qu'au support (16) est associé un dispositif de positionnement (24) qui peut être actionné notamment par voie mécanique, électrique, pneumatique ou hydraulique et sert à amener l'objet (14) dans une position de consigne prédéterminée.

13. Dispositif selon l'une des revendications 9 à 12, caractérisé en ce qu'au moins un dispositif de serrage (40) est disposé de manière à être déplaçable verticalement au-dessus du support (16) pour fixer de façon amovible l'objet (14) au support (16).

14. Dispositif selon l'une des revendications 11 à 13, caractérisé en ce que le dispositif de chauffage (44) servant à ramollir ou faire fondre la partie (20), qui doit être insérée avec une forme concave et/ou convexe, de l'objet (14) comprend au moins une soufflante à air chaud (48) ou analogue, qui est disposée au-dessus du support (16), de préférence sur le dispositif de serrage (40), notamment sur un rail, de manière à être déplaçable le long de ce dernier.

15. Dispositif selon au moins l'une des revendications 9 à 14, caractérisé en ce que le gabarit (52) est déplaçable, au moyen d'un dispositif d'entraînement (58) sur le support plat (16), approximativement perpendiculairement à la génératrice de la zone (20), qui doit être réalisée avec une forme concave et/ou convexe, de l'objet plat (14).

16. Dispositif selon l'une des revendications 11 à 15, caractérisé en ce que le gabarit (52) comporte, dans la partie (54) agencée avec une forme concave, un coudage en excès servant à compenser un angle de rappel élastique (α_{F}) conditionné par le refroidissement, notamment environ 3°, dans la partie (20), agencée avec une forme concave et/ou convexe, de l'objet (14).

17. Dispositif selon l'une des revendications 11 à 16, caractérisé en ce qu'un dispositif de mesure de pression (64) servant à mesurer la force résistante dans la partie (20), qui doit être ramollie ou fondue, de l'objet (14) est associé au au moins un gabarit (52).

18. Boîtier ou analogue constitué par des objets essentiellement plats (14) en matière plastique ou analogue, notamment en un matériau pouvant être ramolli ou fusible thermiquement, fabriqué de préférence au moyen du procédé selon les revendications 1 à 8 et à l'aide du dispositif selon les revendications 9 à 17,
caractérisé en ce
qu'au moins l'un des objets plats (14) forme une surface (18) du boîtier possédant une partie (20') réalisée avec une forme concave et/ou convexe, l'objet plat (14) possédant essentiellement dans la partie (20'), réalisée avec une forme concave et/ou convexe, de la surface (18) du boîtier, une épaisseur de matériau plus faible que dans la partie restante (72).

19. Boîtier selon la revendication 18, caractérisé en ce que l'épaisseur de matériau (73) de l'objet plat (14) est comprise, dans la partie (20') réalisée avec une forme concave et/ou convexe, approximativement entre 10 et 40 % et notamment est égale à environ 25 % de l'épaisseur de matériau (74) de l'objet plat (14) dans la partie restante (72).

20. Boîtier selon la revendication 18 et/ou 19, caractérisé en ce que la au moins une surface (18) du boîtier possède, essentiellement dans la partie (20') réalisée avec une forme concave et/ou convexe, des rainures (76) ou des évidements analogues.

21. Boîtier selon la revendication 20, caractérisé en ce que les rainures (76) ou les évidements analogues s'étendent approximativement parallèlement entre eux et approximativement perpendiculairement à la génératrice de la partie (20'), réalisée avec une forme concave et/ou convexe, de la surface (18) du boîtier.

22. Boîtier selon la revendication 20 et/ou 21, caractérisé en ce que les rainures (76) ou les évidements similaires sont formés de manière à être essentiellement continus et/ou interrompus et/ou qu'au moins une partie des rainures (76) des évidements semblables est interrompue par des barrettes (80) ou analogues, qui s'étendent approximativement dans la direction de la génératrice de la partie (20) réalisée avec une forme concave et/ou convexe.

23. Boîtier selon au moins l'une des revendications 1 à 22, caractérisé en ce que les rainures (76) ou les évidements analogues sont prévus dans la face intérieure (104) de la au moins une surface (18) du boîtier dans la partie (20) réalisée avec une forme concave et/ou convexe.

24. Boîtier selon au moins l'une des revendications 20 à 23, caractérisé en ce que les rainures (76) ou les évidements analogues sont redressés au niveau de leurs extrémités approximativement dans la direction de la génératrice de la partie (20) devant être réalisée avec une forme concave et/ou convexe.

25. Boîtier selon au moins l'une des revendications 18 à 24, caractérisé en ce que la surface (18) du boitier, qui est amenée dans sa forme prédéterminée, est reliée à au moins deux autres surfaces (94,96) du boîtier, qui sont réalisées de manière à être essentiellement rigides, à l'aide d'une liaison à rainure et languette ou analogue (98), notamment par encliquetage.
